# EUROPÄISCHE PATENTSCHRIFT

(11) **EP 2 513 503 B1**
(45) Veröffentlichungstag und Bekanntmachung des Hinweises auf die Patenterteilung: **01.02.2017**
(21) Anmeldenummer: 10787490.1
(22) Anmeldetag: 10.12.2010
(51) Int. Cl.: F16C 27/04, F16H 1/16, B62D 5/00, B62D 5/04, F16H 57/021, F16C 35/04, F16H 25/24, F16C 23/06, F16H 55/24

(54) **LENKGETRIEBE MIT FESTLAGER UND LOSLAGER FÜR SCHRAUBRITZEL**
STEERING GEAR HAVING A FIXED BEARING AND A FLOATING BEARING FOR A SCREW PINION
MÉCANISME DE DIRECTION AVEC PALIER FIXE ET PALIER LIBRE POUR PIGNON À VIS

(30) Priorität: 15.12.2009 DE 102009054655
(43) Veröffentlichungstag der Anmeldung: 24.10.2012
(73) Patentinhaber: Robert Bosch Automotive Steering GmbH, 73527 Schwäbisch Gmünd (DE)
(72) Erfinder: FÜCHSEL, Dennis, 73527 Schwäbisch Gmünd (DE); HAFERMALZ, Jens, 73116 Wäschenbeuren (DE)
(86) Internationale Anmeldenummer: PCT/EP2010/069344
(87) Internationale Veröffentlichungsnummer: WO 2011/073089

(56) Entgegenhaltungen:
- DE-A1-102007 023 456
- DE-A1-102008 001 878
- FR-A1- 2 911 171
- US-A1- 2001 040 067
- US-A1- 2007 102 228

## Beschreibung

Die Erfindung betrifft ein Lenkgetriebe nach dem Oberbegriff des Anspruchs 1 sowie ein damit ausgestattetes Lenksystem. Insbesondere betrifft die Erfindung ein Lenkgetriebe, das als Schraubradgetriebe bzw. Schneckengetriebe für ein elektrisches Hilfskraftlenksystem ausgebildet ist.

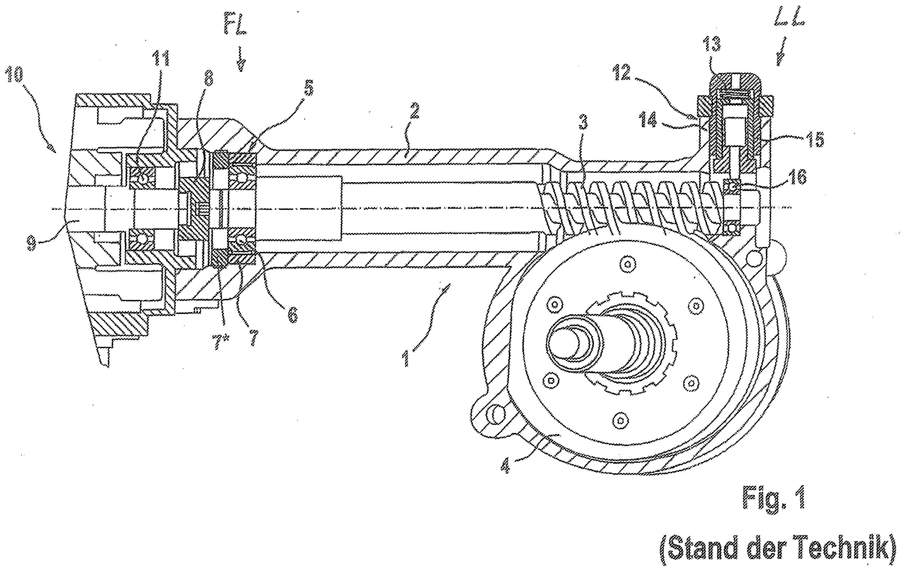

Aus der DE 101 61 715 A1 ist ein Lenkgetriebe in Form eines Schraubradgetriebes für den Einsatz in einer elektrischen Hilfskraftlenkung bekannt. Die Fig.1 zeigt das bekannte Schraubradgetriebe 1, das als Schneckengetriebe mit einem Gehäuse 2 ausgebildet ist, in dem eine Schnecke 3 sowie ein Schneckenrad 4 angeordnet sind, wobei die Schnecke 3 mittels einer Kupplung 8 mit der in einem Lager 11 gelagerten Antriebswelle 9 eines elektrischen Antriebsmotors 10 verbunden ist. Bei dieser bekannten Konstruktion ist die Schneckenwelle in einer Wellenlagerung 5 gelagert, die ein Kugellager 6 in Form eines Vierpunktlagers aufweist und als Pendellager ausgebildet ist, wodurch das Verzahnungsspiel zwischen Schnecke 3 und Schneckenrad 4 während der gesamten Lebensdauer des Getriebes konstant gehalten werden kann. Dazu wird die Schnecke 3 radial mit einer Vorspannkraft beaufschlagt und permanent gegen die Verzahnung des Schneckenrades 4 bzw. Schraubrades gedrückt. Dies geschieht mittels einer Vorspanneinrichtung, die eine Vorspannfeder 13 sowie eine Druckeinrichtung 12 aufweist, um einen spielfreien Eingriff zwischen der Schnecke 3 und dem Schneckenrad 4 sowie eine Kompensation der auftretenden Betriebskräfte zu bewirken. Die Druckeinrichtung 12 kann z.B. mit einer Hydraulikeinrichtung 14 und einem davon betätigtem Druckstück 15 versehen sein, das auf das dortige Lager 16 bzw. die Schnecke 3 selbst wirkt. Damit kann der sich über die Lebenszeit einstellende Verschleiß selbständig kompensiert werden, so dass das Zahnflankenspiel sich möglichst nicht vergrößert und Vibrationsgeräusche vermieden werden. Jedoch hat es sich bei einer solchen bekannten Konstruktion gezeigt, dass an der Wellenlagerung 5 auch Geräusche auftreten können, die hier nur bedingt durch den Einsatz eines teuren Sonderlagers eliminiert werden können.

Die DE 602 10 154 T2 beschreibt ein Lenksystem mit einem Schneckenradgetriebe. Die dort beschriebene Konstruktion verfügt ebenfalls über ein Festlager, das als Schwenklager ausgebildet ist. Das Loslager hat ebenfalls ein Druckstück. Somit wird auch hier ein übliches Lenkgetriebe mit Schraubritzel bzw. Schnecke beschrieben.

Die DE 10 2008 001878 A1 beschreibt ein gattungsgemäßes Lenkgetriebe und schlägt vor, ein Lager eines Schraubritzels bzw. einer
Schnecke, bevorzugt das Festlager, kardanisch in einem Schwenkring im Getriebegehäuse zu lagern, so dass sich dieses Lager dann um eine definierte Achse leicht drehen kann, wobei diese Drehachse orthogonal auf der Längsachse des Schraubritzels bzw. der Schnecke steht. Das zweite Lager des Schraubritzels bzw. der Schnecke, bevorzugt das Loslager, wird im Getriebegehäuse so gelagert, dass es in dem definierten Schwenkbereich radial freigängig um die Drehachse des kardanisch aufgehängten Schwenkringes rotieren kann. Dies ermöglicht eine leichte Schwenkbarkeit des Schraubritzels bzw. der Schnecke in Richtung Schneckenrad. Die Lagerung des Schwenkringes im Getriebegehäuse kann mit Gleitlagern, mit Wälzlagern oder mit Gummi- Metall- Buchsen (Elastomerlager) realisiert werden. Werden Wälzlager verwendet, so sollten diese axial vorgespannt werden, um die Kräfte in Richtung der Drehachse des Schwenkringes 107 spielfrei übertragen zu können. Bei der Verwendung von Gleitlagern zur Lagerung 110 der Schnecke 103 werden für die Übertragung der oben genannten Kräfte zusätzlich elastische Elemente 111 vorgesehen.

Diese üblichen Lenkgetriebe mit Schraubritzel (Schnecke) weisen demnach an dem antriebsseitigen Ende eine als Festlager ausgebildete Wellenlagerung auf, bei der ein erstes Wälzlager (Kugellager) vorgesehen ist. An dem freien Ende des Schraubritzels (Schnecke) ist eine als Loslager ausgebildete Lagerungsvorrichtung mit einem zweiten Wälzlager vorgesehen. Sowohl auf der Festlagerseite wie auch auf der Loslagerseite soll möglichst effizient das Entstehen von Geräuschen vermieden werden oder zumindest stark reduziert werden.

Es sind auch Wellenlagerungen mit Wälzlagern bzw. Kugellagern bekannt, bei denen der Außenring des Kugellagers in einem Gleitlager aufgenommen ist oder bei dem der Innenring des Kugellagers in sog. Silentbuchsen aufgenommen ist, wodurch die Welle somit ebenfalls schwenkbar gelagert ist. Diese Lösungen sind jedoch aufwendig zu realisieren und weisen ein relativ großes Spiel auf, was wiederum zur Geräuschbildung insbesondere bei Lastenwechseln (Wechsellenken) führt. Außerdem sind diese Wellenlagerungen anfällig gegenüber Temperaturschwankungen und weisen keine große Lebensdauer auf.

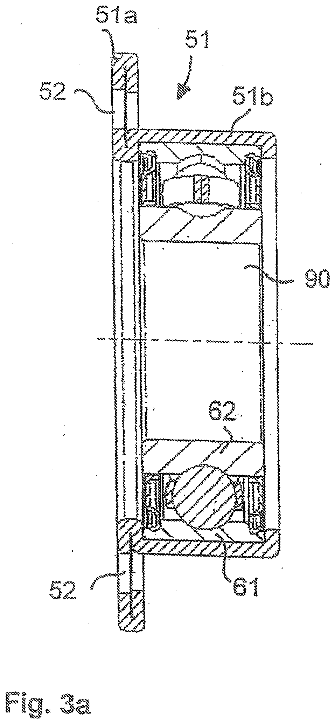

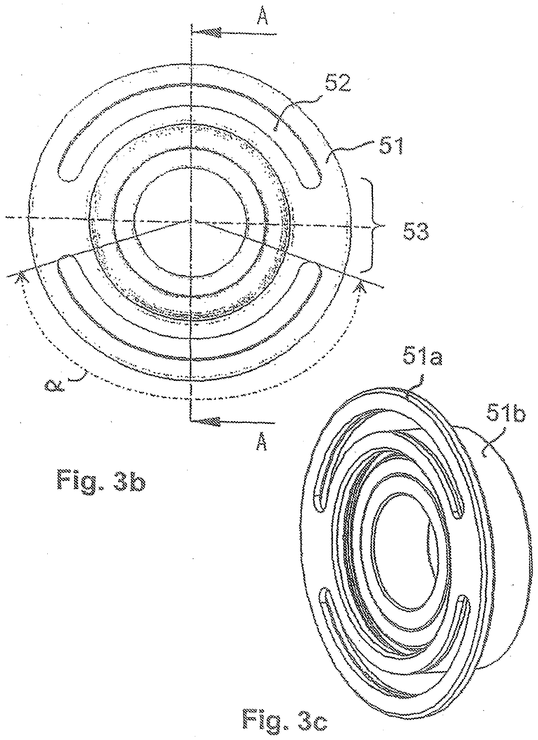

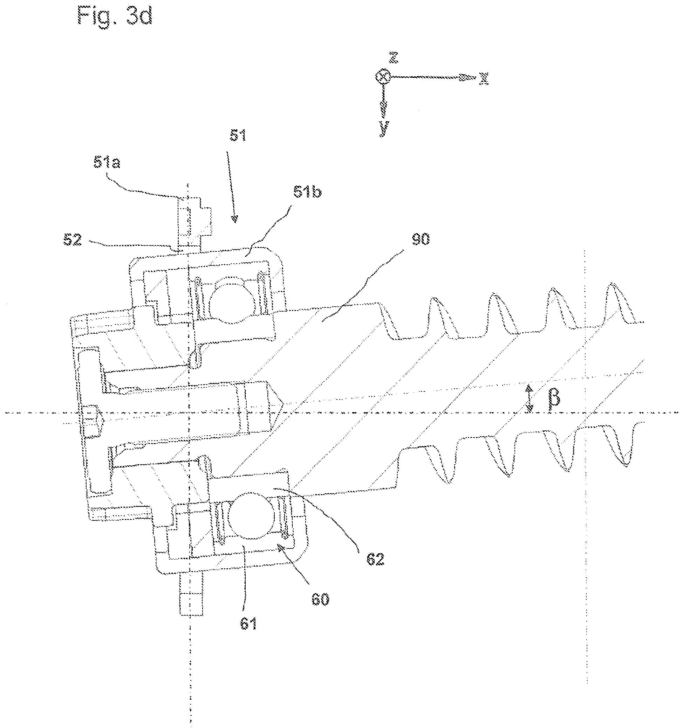

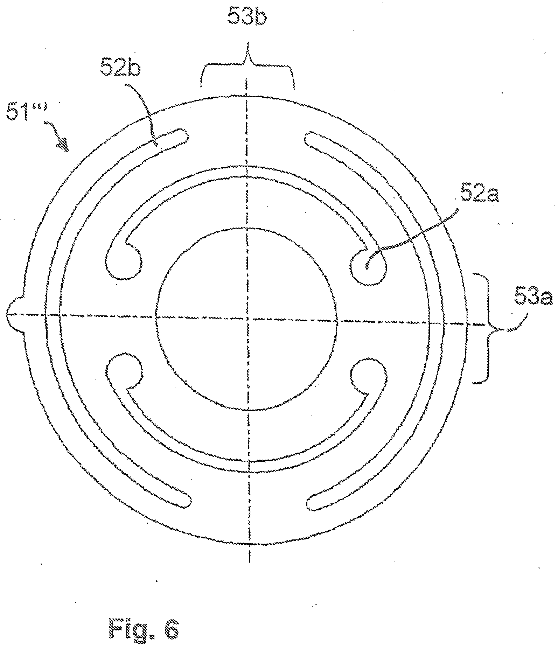

In der veröffentlichten Patentanmeldung FR 2 891 036 wird ein Lenksystem mit einem Kugelumlauf-Lenkgetriebe beschrieben, bei dem die Wellenlagerung (siehe dort Fig. 3-6) mittels einer Halterung verbessert wird, die aus einem Material gefertigt ist, so dass sich zwei ringförmige Abschnitte (24 und 25) ausbilden, die lediglich über schmale Stege (26) miteinander verbunden sind, wobei der innere ringförmige Abschnitt das Wälzlager für die Wellenlagerung aufnimmt und der äußere ringförmige Abschnitt in dem Gehäuse montiert ist. Aufgrund der schmalen Stege kann der innere Abschnitt gegenüber dem äußeren Abschnitt leicht verschwenkt werden (s. Fig. 6), wodurch sich eine gewisse Elastizität in der Wellenlagerung in einem Kugelumlaufgetriebe ergibt. Ein Zusammenhang mit Schraubradgetrieben wird dort nicht hergestellt.

Bei modernen Lenksystemen mit Schraubradgetrieben muss aber zunehmend auf verbesserte Geräuschreduzierung und effektive mechanische Wirkung (Verzahnung) geachtet werden.

Der Erfindung liegt daher die Aufgabe zu Grunde, die Lenkgetriebe der eingangs genannten Art und deren Wellen- bzw. Schraubritzellagerung deutlich zu verbessern. Dabei sollen die genannten Nachteile der herkömmlichen Lösungen in vorteilhafter Weise überwunden werden. Auch soll ein Verfahren zur Herstellung einer Halterung für eine solche Wellenlagerung vorgeschlagen werden.

Gelöst wird die Aufgabe durch ein Lenkgetriebe mit den Merkmalen des Anspruchs 1.

Demnach wird ein Lenkgetriebe mit einem Schraubritzel (z.B. mit einer Schnecke) vorgeschlagen, bei dem die Wellenlagerung eine in einem Gehäuseabschnitt des Lenkgetriebes montierte Halterung mit Aussparungen aufweist, die eine Schwenkbewegung für einen ringförmigen Abschnitt der Halterung ermöglichen, der mit dem ersten Wälzlager montiert ist, und bei dem die Halterung einen mit den Aussparungen versehenen scheibenförmigen Abschnitt aufweist, gegenüber dem der ringförmige Abschnitt verschwenkbar ist, wobei der ringförmige Abschnitt entweder mit dem Außenring des ersten Wälzlagers montiert und der scheibenförmige Abschnitt an dem Gehäuseabschnitt befestigt ist, oder der ringförmige Abschnitt mit dem Innenring des ersten Wälzlagers montiert und der scheibenförmige Abschnitt an der Welle befestigt ist.

Demnach wird auf der Festlagerseite eine Wellenlagerung vorgeschlagen, bei der das Wälzlager nicht direkt in dem Gehäuseabschnitt montiert ist, sondern eine Halterung für das Wälzlager vorgesehen ist, die zwei Abschnitte aufweist und mittels Aussparungen eine zwischen den Abschnitten hergestellte Elastizität aufweist, die sich geräuschmindernd auf die Wellenlagerung auswirkt. Ein Abschnitt der Halterung ist ringförmig ausgebildet und mit einem der Lageringe (Außen- oder Innenring) des Wälzlagers montiert. Der andere Abschnitt ist scheibenförmig ausgebildet und kann aufgrund der Aussparungen gegenüber dem ringförmigen Abschnitt verschwenkt werden. Dieser scheibenförmige Abschnitt ist in dem Gehäuseabschnitt montiert, wenn der ringförmige Abschnitt den Außenring des Wälzlagers aufnimmt bzw. umschließt. Oder der scheibenförmige Abschnitt ist mit der Welle verbunden, wenn der ringförmige Abschnitt den Innenring trägt. Beide Alternativen beruhen auf dem gemeinsamen Prinzip, nämlich auf der Festlagerseite eine elastische Halterung für das Wälzlager einzubauen, die entweder zwischen Wälzlager und Gehäuse oder zwischen Wälzlager und Welle montiert ist. Mit anderen Worten: Die in der Halterung vorgesehenen Aussparungen verleihen der Halterung eine definierbare Elastizität, so dass zumindest der Abschnitt der Halterung, der den Außenring bzw. Innenring des Wälzlagers (z.B. eines Kugellagers) hält, eine Bewegung, vorzugsweise eine leichte Schwenkbewegung, ausführen kann.

Vorzugsweise bewirkt die Schwenkbewegung eine Torsion von zwischen den Aussparungen sich ausbildenden Übergangsbereichen bewirkt, wobei das Schraubritzel durch die Torsion der Übergangsbereiche in das Schraubrad angefedert wird. Dabei kann an oder in der Halterung ein Versatz vorgesehen sein, der im montierten Zustand des Lenkgetriebes eine durch die Torsion angefederte Schwenkbewegung des Schraubritzels in Bezug auf das Schraubrad bewirkt. Auch kann zumindest in einem der Lager, insbesondere an oder in dem Festlager ein solcher Versatz vorgesehen ist, der im montierten Zustand des Lenkgetriebes eine durch die Torsion angefederte Schwenkbewegung des Schraubritzels in Bezug auf das Schraubrad bewirkt. Alternativ oder zusätzlich dazu können das Schraubritzel und/oder das Schraubrad zueinander so dimensioniert sein, dass ein solcher Versatz sich ausbildet. Zumindest durch das das Festlager stellt sich ein Achsabstand zwischen Schraubritzel und Schraubrad ein, der um den Versatz kleiner ist als ein üblicher Achsabstand. Somit bewirkt auch ein Achsabstand, der kleiner ist als der theoretisch für die Verzahnung erforderliche Achsabstand des Getriebes, einen solchen Versatz. Durch diesen Achsversatz ergibt sich nach der Montage des Getriebes in Verbindung mit der Federscheibe, deren Übergangsbereiche tordiert sind, immer eine Anfederkraft des Schraubritzels in Richtung des Schraubrades.

Vorzugsweise ist die auf der Festlagerseite vorgesehene Halterung mehrstückig ausgebildet, wobei der ringförmige Abschnitt als ein erstes Stück aus einem ersten Material, insbesondere aus Weichblech, und der scheibenförmige Abschnitt als ein zweites Stück aus einem zweiten Material, insbesondere aus Federstahlblech, gefertigt sind. Dadurch kann die Halterung auch durch Zusammensetzen von mehreren Teilen bzw. Abschnitten hergestellt werden, wobei diese jeweils aus solchen Materialien geschaffen sein können, die für die Funktion des jeweiligen Teils bzw. Abschnitt optimal sind. Insbesondere der scheibenförmige Abschnitt, der eine bestimmte Elastizität aufweisen soll, wird z.B. aus Federstahlblech in Form einer Federscheibe gefertigt. Alle Teile bzw. Abschnitte können kostengünstig aus entsprechendem Blech hergestellt werden.

Auf der Loslagerseite, d.h. am freien Wellenende des Schraubritzels bzw. der Schnecke ist vorzugsweise eine Lagerungsvorrichtung ausgebildet, die ein Wälzlager (das zweite Wälzlager) aufweist, das in einem Lagerungs-Innenring angeordnet ist, der wiederum mittels eines Steges, insbesondere eines elastischen Stegelements, an einen in dem Gehäuseabschnitt angeordneten Lagerungs-Außenring angebunden ist. Der Lagerungs-Innenring ist als eine das zweite Wälzlager aufnehmende erste Buchse bzw. Innen-Buchse ausgebildet. Der Lagerungs-Außenring ist als eine die Innen-Buchse aufnehmende zweite Buchse bzw. Außen-Buchse ausgebildet, wobei zwischen den Buchsen ein von dem Steg bzw. Stegelement überbrückter Zwischenabstand bzw. Zwischenraum ausgebildet ist.

Außerdem kann in dem Lagerungs-Außenring bzw. der Außen-Buchse mindestens ein, insbesondere aus einem Elastomer gefertigtes elastisches Anschlagelement, angeordnet sein, gegen das der Lagerungs-Innenring bzw. die Innen-Buchse anschlägt, insbesondere bei im Lenkgetriebe auftretenden Lastwechseln anschlägt. Mindestens eines der Anschlagelemente kann als ein zumindest bei einem Lastwechsel auf das Wälzlager drückendes Federelement ausgebildet sein.

Durch diese Maßnahmen wird eine definierte Elastizität in das Loslager eingebracht, die Geräuschbildung begrenzt und den Eingriff des Schraubritzels in ein Schraubrad verbessert.

In diesem Zusammenhang ist es vorteilhaft, wenn die Federkennlinie des Federelements einen Bereich geringerer und einen Bereich größerer Steigung aufweist. Auch kann das Federelement aus einem Elastomer hergestellt sein. Demnach ist des Merkmal "Federelement" allgemein als elastisches Element zu verstehen und beschränkt sich nicht auf eine Feder im engeren Sinne. Es ist auch denkbar, dass für die Herstellung des Federelements Werkstoffe mit unterschiedlichen Federkennlinien bzw. Elastizitätskoeffizienten miteinander kombiniert werden.

Beide Maßnahmen, sowohl auf der Festlagerseite wie auch auf der Loslagerseite wirken kombinatorisch in besonders vorteilhafter Weise zusammen. Sie sind kostengünstig zu realisieren, können schnell an die konstruktiven und leistungsbezogenen Erfordernisse des Lenkgetriebes angepasst werden (Materialwahl für Festlagerteile bzw. -abschnitte und/oder Anpassung der Federkennlinie für das Loslager) und reduzieren deutlich die Geräuschbildungen. Zudem wird der Verzahnungseingriff deutlich verbessert.

Erfindungsgemäß wird auch ein Lenksystem vorgeschlagen, das mit einem solchen Lenkgetriebe ausgestattet ist und insbesondere als elektrisches Hilfskraftlenksystem ausgebildet ist.

Vorgeschlagen wird auch ein Verfahren zur Herstellung einer Halterung für eine solche Wellenlagerung, wobei die Halterung aus einem scheibenförmigen oder laschenförmigen Abschnittsteil (z.B. aus Federstahlblech) hergestellt wird und aus einem ringförmigen bzw. topfförmigen Abschnittsteil (z.B. aus Weichblech) hergestellt wird, indem beide Abschnittsteile miteinander form- und/oder kraftschlüssig verbunden werden. Dabei können z.B. in dem laschenförmigen Abschnittsteil Öffnungen vorhanden sein, durch die von einer Seite Material des ring- bzw. topfförmigen Abschnittsteils gedrückt und anschließend von der Gegenseite umgeformt wird, so dass ein Formschluss und /oder Kraftschluss beide Abschnittsteile miteinander verbindet.

Vorzugsweise ist die Halterung mehrteilig gestaltet, wobei die Aussparungen Übergangsbereiche zwischen den Abschnitten schwächen, so dass die Abschnitte gegeneinander elastisch bewegbar sind. Dabei weist die Halterung bevorzugt einen scheibenförmigen oder laschenförmigen Abschnitt zur Befestigung in dem Gehäuseabschnitt des Lenksystems auf und weist einen topfförmigen Abschnitt zur Aufnahme des Außenrings des Kugellagers auf. In diesem Zusammenhang ist es vorteilhaft, wenn die Aussparungen in dem scheibenförmigen oder laschenförmigen Abschnitt als zwei sich gegenüberliegende kreissegmentförmige Aussparungen ausgebildet sind, die jeweils einen Bereich des topfförmigen Abschnitts umschließen. Dabei können die kreissegmentförmigen Aussparungen jeweils einen Bereich des topfförmigen Abschnitts soweit umschließen, dass in dem scheibenförmigen oder laschenförmigen Abschnitt zwei sich gegenüberliegende stegförmige Übergangsbereiche verbleiben. Zudem können die sich gegenüberliegenden stegförmigen Übergangsbereiche eine halbkardanisch elastische Verbindung zwischen den Abschnitten darstellen.

Somit wird eine definierbare Materialschwächung zwischen dem scheibenförmigen oder laschenförmigen Abschnitt und dem topfförmigen Abschnitt vorgesehen, der das Kugellager aufnimmt. Es werden zwei sich gegenüberliegende Übergangsbereiche ausgebildet, die wie eine halb-kardanische Aufhängung des topfförmigen Abschnitts wirken, so dass dieser elastisch schwenkbar mit dem scheibenförmigen oder laschenförmigen Abschnitt verbunden ist.

Vorzugsweise ist zumindest der scheibenförmige oder laschenförmige Abschnitt der Halterung aus Blech, insbesondere aus Federstahlblech, hergestellt. Außerdem weist vorzugsweise zumindest der topfförmige Abschnitt ein zylindrisches, insbesondere aus Weichblech geformtes, Gehäuse auf, das den Außenring des Kugellagers umschließt. Die Halterung ist vorzugsweise mehrstückig ausgebildet und weist dementsprechend mindestens einen aus Federstahlblech geformten Abschnitt und einen aus Weichblech geformten Abschnitt aufweist.

Somit wird der scheibenförmige oder laschenförmige Abschnitt mittels eines elastisch verformbaren Materials zu einer elastischen Scheibe bzw. Federscheibe ausgebildet. Der topfförmige Abschnitt wird hingegen mittels eines plastisch verformbaren Materials zu einem für das Kugellager optimierten Aufnahmeraum ausgebildet.

Außerdem ist es vorteilhaft, wenn an dem Gehäuseabschnitt des Lenksystems zumindest ein elastisches Dämpfungselement vorgesehen ist, gegen das die axial bewegbare Halterung anschlägt. Dadurch wird die Lagerung der Federscheibe zusätzlich in axialer Richtung gedämpft.

Die Halterung, insbesondere der scheibenförmige oder laschenförmige Abschnitt, kann in dem Gehäuseabschnitt mittels einer Stellschraube und/oder eines Schraubrings fixiert sein. Zudem kann der scheibenförmige oder laschenförmige Abschnitt eine Außennut und/oder einen Außenwulst aufweisen. Dadurch wird die Halterung mit einer definierbaren Kraft in dem Gehäuseabschnitt fixiert, wobei sie optimal für die zuvor genannte kardanische Aufhängung ausgerichtet werden kann.

Auch kann die Halterung, insbesondere der topfförmige Abschnitt, direkt an dem Außenring des Kugellagers ausgebildet sein. Außerdem kann das Kugellager als Vierpunktlager ausgebildet sein.

Diese und weitere vorteilhafte Weiterbildungen und Ausgestaltungen der Erfindung ergeben sich aus den Unteransprüchen und aus den nachfolgend beschriebenen und anhand der Zeichnung schematisch dargestellten Ausführungsbeispielen, wobei:
- Fig. 2a: eine Querschnittsansicht eines erfindungsgemäßen Lenkgetriebes (Schraubradgetriebe) mit Wellenlagerung auf der Festlagerseite sowie auf der Loslagerseite zeigt;
- Fig. 2b: eine Querschnittsdetailansicht eines Schraubradgetriebes mit erfindungsgemäßer Wellenlagerung auf der Festlagerseite in einer ersten Ausführungsform zeigt;
- Fig. 3 a,b,c: für die erste Ausführungsform verschiedene Ansichten der in der Wellenlagerung (Festlagerseite) vorgesehenen Halterung zeigen;
- Fig. 3d: die elastische Beweglichkeit bzw. Schwenkbarkeit der Halterung veranschaulicht;
- Fig. 4 a,b,c: für eine zweite Ausführungsform verschiedene Ansichten einer in der Wellenlagerung vorgesehenen Halterung zeigen;
- Fig. 5 a,b: für eine dritte Ausführungsform verschiedene Ansichten einer in der Wellenlagerung vorgesehenen Halterung zeigen;
- Fig. 6: für eine vierte Ausführungsform einer in der Wellenlagerung vorgesehenen Halterung zeigt (voll-kardanische Variante);
- Fig. 7 a,b: für eine fünfte Ausführungsform einer in der Wellenlagerung vorgesehenen Halterung zeigt (zweiteilig, halb-kardanische Variante);
- Fig. 8 a,b,c: Querschnittsansichten zu den Fig. 7 a,b zeigen;
- Fig. 9 a,b: im Detail eine Verbindungstechnik zur Herstellung der zweiteiligen Halterung nach Fig. 7 a,b zeigen; und
- Fig. 10 a,b: im Detail eine alternative Verbindungstechnik bzw. eine danach hergestellte sechste Ausführungsform einer Halterung zeigen.
- Fig. 11 a,b: für eine sechste Ausführungsform verschiedene Ansichten einer in der Wellenlagerung (Festlagerseite) vorgesehenen Halterung zeigen;
- Fig. 12: eine Querschnittsdetailansicht eines Schraubradgetriebes mit einer alternativ gestalteten Wellenlagerung auf der Festlagerseite gemäß einer siebten Ausführungsform zeigt;
- Fig. 13 a,b,c: für die siebte Ausführungsform verschiedene Ansichten der in der Wellenlagerung (Festlagerseite) vorgesehenen Halterung zeigen;
- Fig. 14: eine radiale Querschnittsdetailansicht einer auf der Loslagerseite gestalteten Wellenlagerung gemäß einer ersten Ausführungsform zeigt;
- Fig. 15: eine radiale Querschnittsdetailansicht einer auf der Loslagerseite gestalteten Wellenlagerung gemäß einer zweiten Ausführungsform zeigt;
- Fig. 16: eine radiale Querschnittsdetailansicht einer auf der Loslagerseite gestalteten Wellenlagerung gemäß einer dritten Ausführungsform zeigt;
- Fig. 17: eine radiale Querschnittsdetailansicht einer auf der Loslagerseite gestalteten Wellenlagerung gemäß einer vierten Ausführungsform zeigt;
- Fig. 18: eine radiale Querschnittsdetailansicht einer auf der Loslagerseite gestalteten Wellenlagerung gemäß einer fünften Ausführungsform zeigt;
- Fig. 19: verschiedene Querschnittsdetailansicht einer auf der Loslagerseite gestalteten Wellenlagerung gemäß einer sechsten Ausführungsform zeigt;
- Fig. 20: eine axiale Querschnittsdetailansicht einer auf der Loslagerseite gestalteten Wellenlagerung gemäß der sechsten Ausführungsform zeigt; und
- Fig. 21: eine schematische Funktionsdarstellung zeigt, die die durch die Erfindung bewirkte Anfederung der Schnecke veranschaulicht.

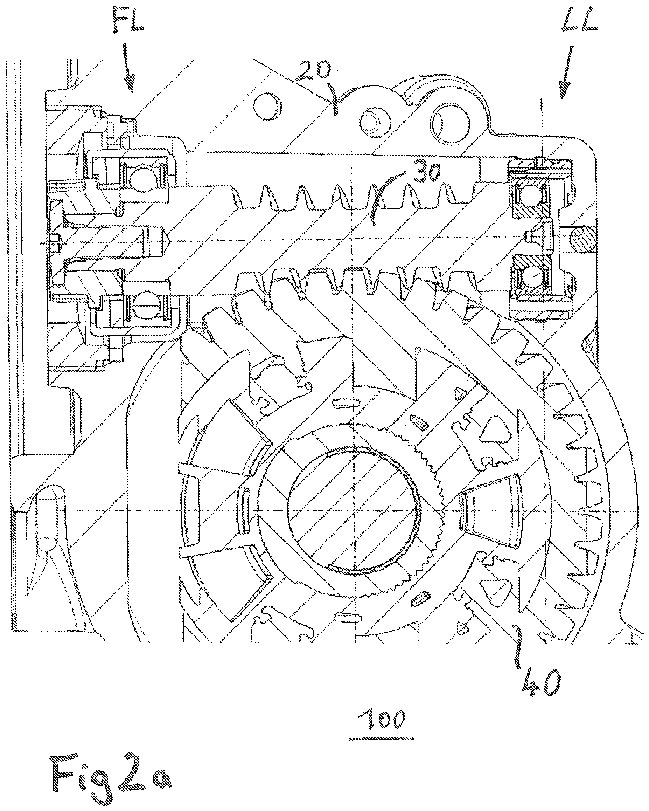

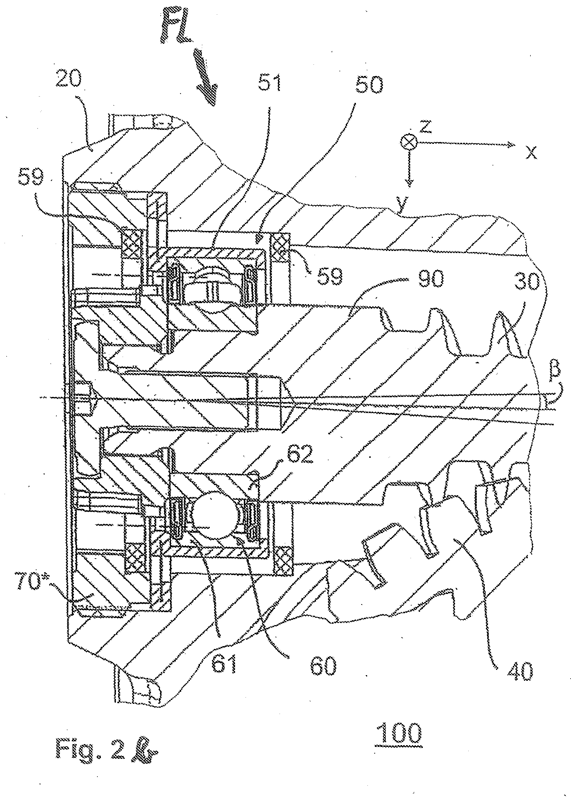

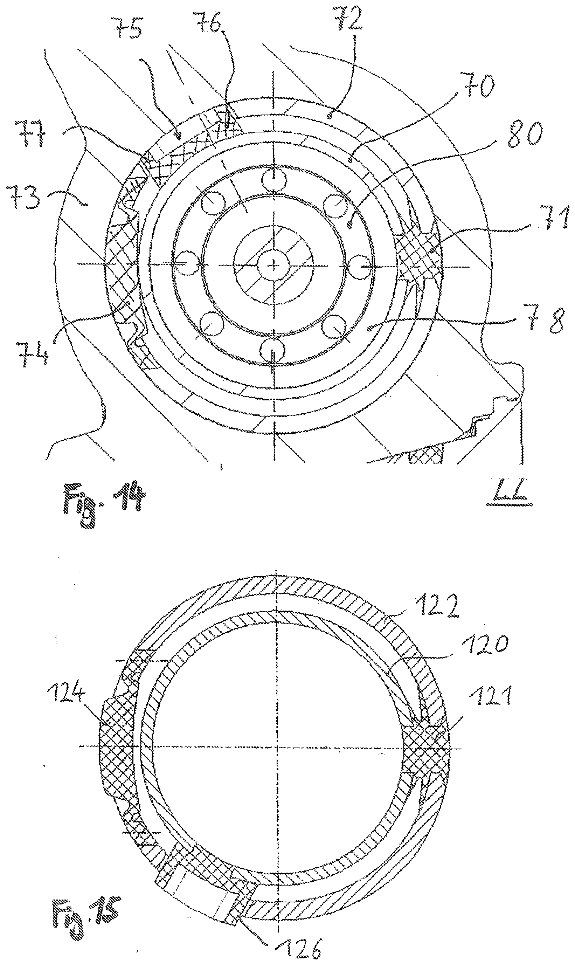

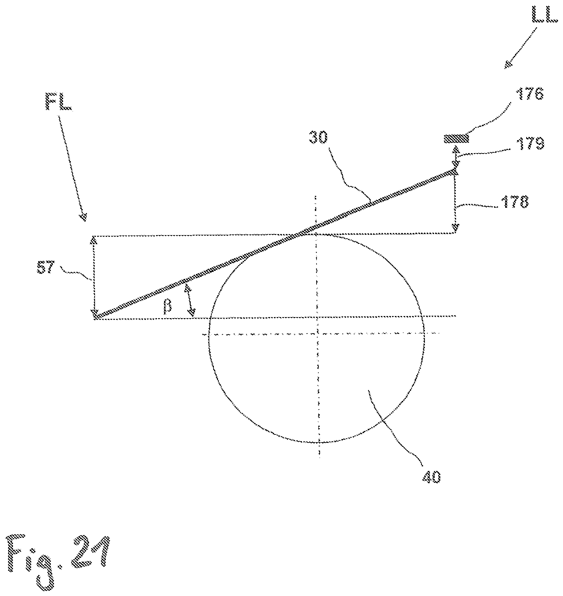

Die in den Figuren 2 bis 13 dargestellten Ausführungsformen zeigen beispielhaft bevorzugte Konstruktionsvarianten von erfindungsgemäß ausgebildeten Wellenlagerungen auf der Festlagerseite. Die in den Figuren 14 bis 2 dargestellten Ausführungsformen zeigen beispielhaft bevorzugte Konstruktionsvarianten von erfindungsgemäß ausgebildeten Wellenlagerungen auf der Loslagerseite. Die Fig. 21 veranschaulicht das Zusammenwirken beider Lagerungen. Alle Konstruktionsvarianten können einzeln oder auch in Kombination, d.h. durch Kombination einer bestimmten Festlagervariante mit einer bestimmten Loslagervariante, insbesondere in einem als Schneckengetriebe ausgebildeten Lenkgetriebe realisiert werden. Vorzugsweise wird das Schneckengetriebe in einem elektrischen Hilfskraftlenksystem eingesetzt. Die Erfindung ist aber nicht auf Schnecken- oder Schraubradgetriebe im speziellen beschränkt, sondern kann allgemein auf jede Art von Lenkgetrieben angewendet werden.

Die Fig. 2a zeigt im Vergleich zum Stand der Technik (Fig. 1) das erste Ausführungsbeispiel eines erfindungsgemäßen Lenkgetriebes 100, bei dem im Gehäuse 20 sowohl auf der Festlagerseite FL wie auch auf der Loslagerseite LL die nachfolgend noch im Detail beschriebenen Lagerungen des antriebsseitigen Wellenendes bzw. des freien Wellenendes einer in dem Lenkgetriebe angeordneten Schnecke 30 beschrieben werden, die im Eingriff mit einem Schneckenrad 40 steht.

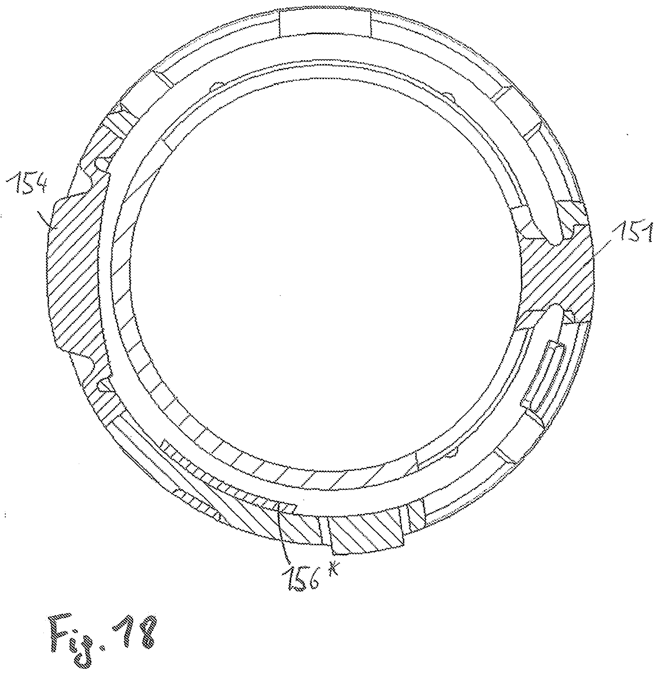

Anhand der Fig. 2b wird im Detail die Wellenlagerung 50 auf der Festlagerseite FL dargestellt und nachfolgend auch mit Verweis auf die Fig. 3-13 beschrieben (die auf der Loslagerseite ausgeführten Lagerungen werden später noch anhand der Fig. 14-20 beschrieben).

Die Fig. 2b zeigt den Ausschnitt für die Festlagerseite FL eines als Schneckengetriebe gestalteten Lenkgetriebes 100. Eine über eine Welle 90 mit einem (nicht dargestellten) elektrischen Antriebsmotor verbindbare Schnecke 30 ist in einem Gehäuseabschnitt 20, nämlich dem Getriebegehäuse, angeordnet und steht dort mit einem Schneckenrad 40 in Eingriff. Zur Verbesserung des Eingriffs ist ein (hier nicht dargestelltes, aber später noch beschriebenes) Loslager vorgesehen, welches das freie Ende der Schnecke 30 elastisch lagert und mit einer Vorspannkraft beaufschlagt, um diese radial (y-Richtung) gegen das Schneckenrad 40 drückt.

Die Welle 90 der Schnecke 30 ist auf der Festlagerseite in einer Wellenlagerung 50 gelagert, die eine vom Gehäuseabschnitt 20 aufnehmbare Halterung 51 aufweist, die den Außenring 61 des Wälzlagers 60 (hier als Kugellager ausgeführt) aufnimmt, wobei die Halterung 51 Aussparungen 52 aufweist, die eine leichte Verschränkung der Halterung 51 ermöglichen. Auch ist die Wellenlagerung 50 in dem Gehäuseabschnitt 20 axial verschiebbar (x-Richtung) aufgenommen. Die Halterung 51 ist ringförmig (hier sogar topfförmig) ausgebildet, so dass sie den Außenring 61 des Wälz- bzw. Kugellagers 60 sicher aufnimmt und insbesondere spielfrei fixiert. Dabei weist die Halterung 51 einen Abschnitt auf, der eine topfförmige bzw. zylindrische Gehäuseform hat, die den Außenring 61 des Kugellagers 60 ganz umschließt. Ein anderer Abschnitt der Halterung 51 ist scheibenförmig ausgebildet und dient zur Befestigung der Halterung 51 in dem Gehäuseabschnitt 20. Dies geschieht z.B. mittels eines verstellbaren Schraubrings 70*. Vorzugsweise sind noch elastische Dämpfungselemente 59 für die axiale Bewegung (x-Richtung) vorgesehen.

Wie die Fig. 3a, 3b und 3c zeigen, kann die Halterung 51 einstückig aus Blech, insbesondere aus Federstahlblech, hergestellt sein und den Außenring 61 spielfrei fixieren. Die Aussparungen 52 dienen dazu, eine relative Bewegung zwischen dem scheibenförmigen Abschnitt (Federscheibe) 51 a und dem topfförmigen Abschnitt (Aufnahmegehäuse) 51 b zuzulassen. Insbesondere können sich beide Abschnitte gegeneinander in einer definierten Richtung (z.B. y-Richtung) verschränken. Die Aussparungen 52 sind z.B. als kreissegmentförmige Ausschnitte in der Federscheibe 51a so ausgebildet, dass zwei sich gegenüberliegende Übergangsbereiche 53 bzw. stegförmige Übergänge hin zu dem Aufnahmegehäuse 51 b ergeben. Die Aussparungen 52 haben einen definierten Öffnungswinkel α. Die damit einhergehende Materialschwächung führt zu einer definierbaren Elastizität in der Halterung 51, so dass das Aufnahmegehäuse 51b gegenüber der Federscheibe 51 a etwas verschwenkt werden kann. Die beiden Übergangsbereiche 53 wirken beim Schwenken als Torsionsstäbe und erzeugen ein definiertes Schwenkmoment auf die Schnecke.

Diese Bewegungsmöglichkeit wird in der Fig. 3d veranschaulicht, in der ein Verschwenken bzw. Verschränken zwischen den beiden Abschnitten 51 a und 51 b um einen Winkel β dargestellt ist. Die beiden Stege 53 (s. Fig. 3b) bilden eine halb-kardanische Verbindung bzw. Aufhängung aus, die entlang der z-Achse ausgerichtet ist. Die Schwenkrichtung liegt somit senkrecht zur Wellenachse (x-Richtung) und geht in radiale Richtung (y-Richtung), wodurch eine elastisch schwenkbare Wellenlagerung des Kugellagers bzw. der Schneckenwelle 90 ermöglicht wird. Der Achsabstand der beiden Getriebeteile Schnecke und Schneckenrad wird verkleinert. Wenn die Getriebeteile montiert werden, muss die Schnecke im Übergangsbereich 53 schwenken, da sonst durch den verkleinerten Achsabstand keine Montage möglich wäre. Aus der Torsion der Übergangsbereiche 53 erfolgt die Anfederung der Schnecke in das Schneckenrad. Dadurch wird die Verzahnung spielfrei und die Geräuschentwicklung beim Wechsellenken ist akzeptabel.

Das Wälz- bzw. Kugellager 60 (s. auch Fig. 2b) ist z.B. als Vierpunktlager ausgebildet und wird von der Halterung 50 fixiert, die vorzugsweise auch axial in x-Richtung verschoben werden kann. Als Anschlagselemente sind an dem Gehäuseabschnitt 20 elastische Dämpfungselemente 59 vorgesehen, gegen welche die axial bewegbare Halterung 50 anschlägt. Die Fixierung der Halterung 51 selbst erfolgt über die Federscheibe 51 a, die mittels eines Schraubringes 70* in dem Gehäuseabschnitt 20 gesichert ist.

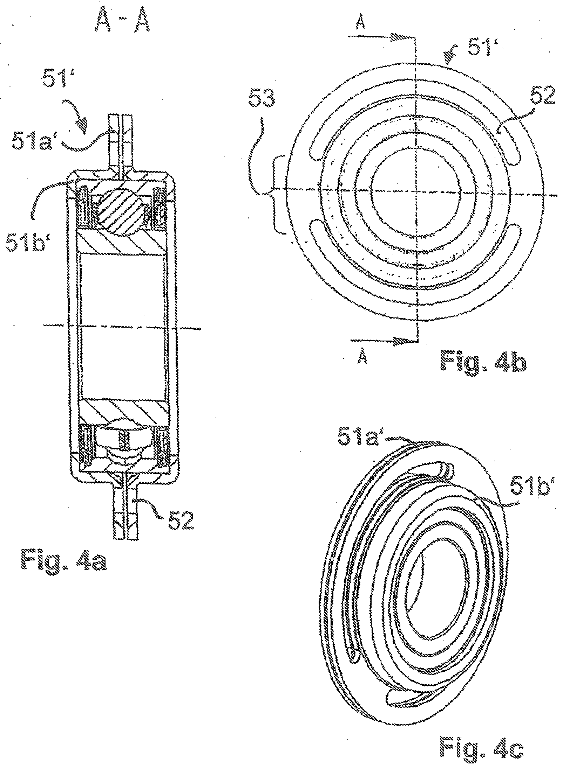

Wie die Fig. 4a, 4b und 4c zeigen, kann auch eine Ausführungsform so ausgestaltet sein, dass die Halterung 51' mehrstückig ausgebildet ist. Beispielsweise ist die Halterung 51' aus zwei schalenförmigen Blechen 51'a, 51'b zusammengesetzt, die insbesondere symmetrisch zueinander gestaltet sein können. Die Wellenlagerung kann z.B. auch durch eine Halterung realisiert werden, die direkt an dem Außenring 61 des Kugellagers 60 ausgebildet ist (vergl. Fig. 3d).

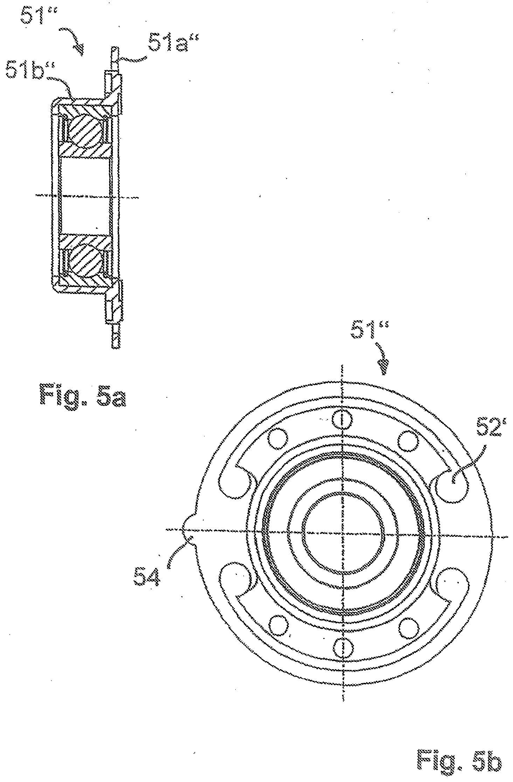

Die Fig. 5a und 5b zeigen eine weitere Ausführungsform, bei der die Halterung 51" ebenfalls mehrstückig ausgebildet ist, wobei beide Abschnitte 51 a" und 51 b" miteinander verclincht sind. Der scheibenförmige Abschnitt 51a" (Federscheibe) besteht aus einem Federstahlblech, der topfförmige Abschnitt 51 b" aus verformbaren Weichblech. An der Federscheibe 51 a" ist ein Außenwulst 54 bzw. Zapfen oder Nase angebracht, um die Federscheibe und damit auch die gesamte Halterung 51" in dem Gehäuseabschnitt exakt positionieren zu können. Auch diese Konstruktion entspricht einer elastischen halb-kardanischen Verbindung, die eine schwenkbare Bewegung des topfförmigen Abschnitts 51 b" gegenüber der Federscheibe 51 a" ermöglicht.

In der Fig. 6 ist eine weitere Variante in Gestalt einer Halterung 51"' dargestellt: Hier wird eine elastische voll-kardanische Verbindung zwischen beiden Abschnitten ermöglicht. Dazu weist die Federscheibe vier Aussparungen auf, von denen zwei Aussparungen 52a sich im inneren Bereich der Federscheibe befinden und dazu um 90 Grad verschoben sich zwei weitere Aussparungen 52b im äußeren Bereich der Federscheibe befinden. Es ergeben sich also jeweils zwei sich gegenüberliegende stegförmige Übergangsbereiche 53a bzw. 53b, die jeweils eine halb-kardanische Aufhängung darstellen (vergl. Fig. 3d), so dass sich somit eine voll-kardanische Aufhängung ergibt. Die hier gezeigte Konstruktion erlaubt eine Schwenkbewegung in allen Richtungen aus dem Mittelpunkt der Federscheibe. Mit anderen Worten: die Schwenkachse kann beliebig in der Ebene der Federscheibe (y-z-Ebene) liegen, wobei sie durch den Mittelpunkt der Federscheibe geht. Damit entsteht eine volle Beweglichkeit bzw. Elastizität der Wellenlagerung.

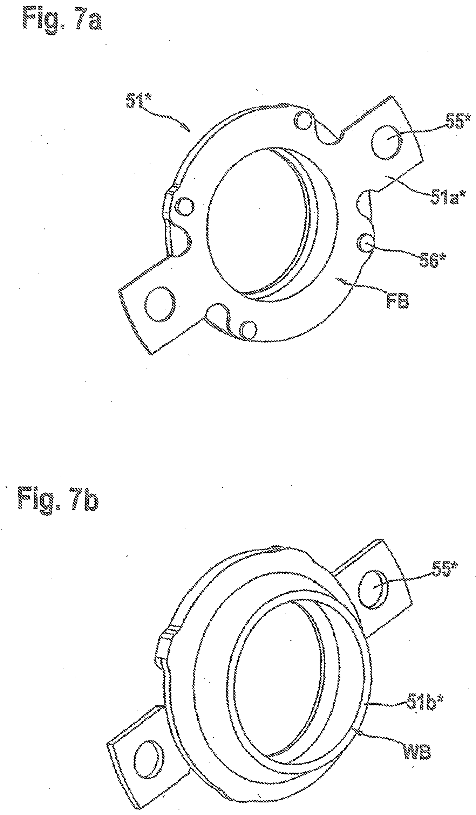

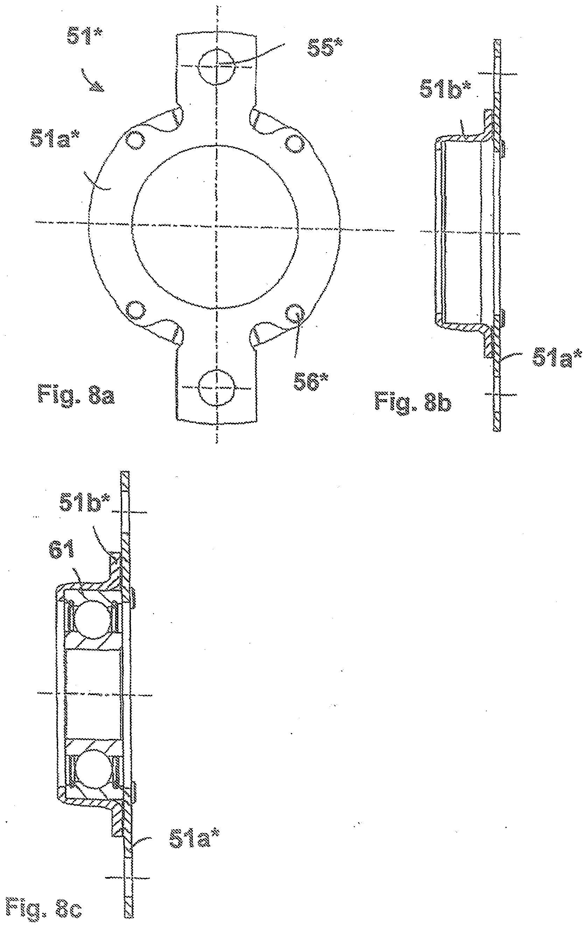

In den Fig. 7a und 7b ist als fünfte Ausführungsform eine zweiteilige Halterung 51* dargestellt, die neben einem topfförmigen Abschnitt bzw. Abschnittsteil 51b* nun einen nicht-scheibenförmigen, sondern laschenförmigen Abschnitt bzw. Abschnittsteil 51*a aufweist. Dadurch wird Material gespart. Außerdem kann die Halterung über Durchgangsbohrungen 55*, die an dem laschenförmigen Abschnitt 51a* vorgesehen sind, in dem Gehäuse befestigt bzw. montiert werden. Die Fig. 8a bis 8c zeigen Querschnittsansichten dazu.

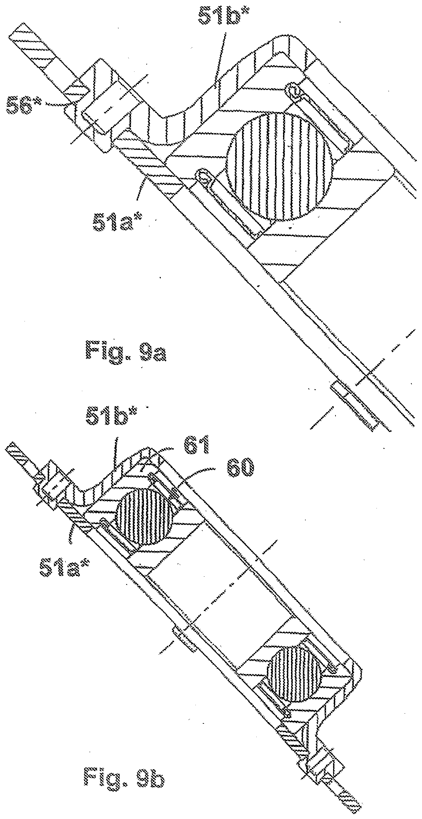

Der laschenförmige Abschnitt 51a* ist aus einem ersten Blech bzw. Blechmaterial, nämlich Federstahlblech gefertigt. Der topfförmige Abschnitt 51*b ist aus einem zweiten Blech gefertigt, das weicher als das erste Blech ist. Zum Verbinden der beiden Teile 51a* und 51b* weist das erste Abschnittsteil 51a* mehrere Öffnungen auf 56* bzw. Löcher auf, durch die auf einer Seite Material des topfartigen Teils 51b*, der aus Weichblech WB besteht, gedrückt wird und anschließend auf der Gegenseite verpresst wird, z.B. zu Nieten verpresst wird, wie dies anhand der Fig. 9 a,b veranschaulicht wird.

Zur Herstellung der hier beschriebenen Halterungen, wie sie etwa durch die Halterung 51* repräsentiert werden, wird also vorgeschlagen, dass in dem ersten Blech Öffnungen 56* vorhanden sind, durch die von einer Seite Material des zweiten Blechs gedrückt und anschliessend von der Gegenseite umgeformt wird, so dass ein Formschluss und /oder Kraftschluss beide Abschnittsteile 51a*, 51b* miteinander verbindet.

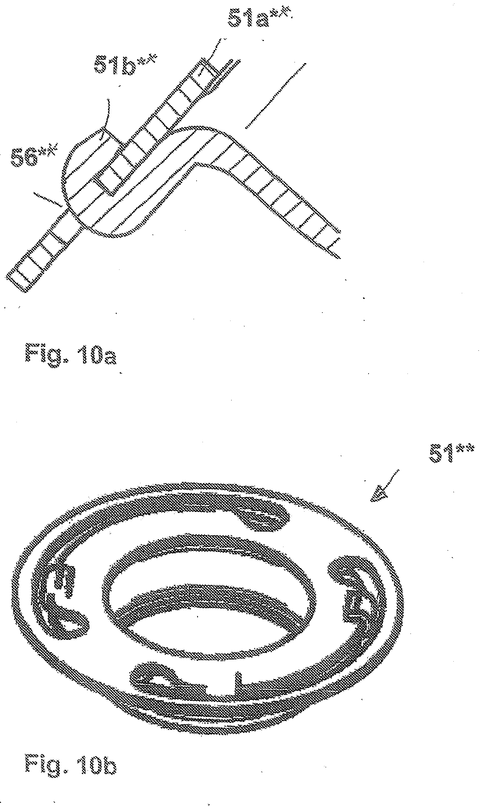

Die Fig. 10a,b zeigen im Detail eine dazu alternative Verbindungstechnik bzw. eine danach hergestellte sechste Ausführungsform einer Halterung 51**, die wiederum einen scheibenförmigen Abschnitt aufweist.

Zur Herstellung dieser Halterung 51** wird vorgeschlagen, dass in dem ersten Blech ebenfalls Öffnungen 56** vorhanden sind, durch die aber dann hervorstehende Bereiche des topfartigen Abschnittsteils 51b** gesteckt werden, um anschliessend auf der Gegenseite umgeformt zu werden, so dass ebenfalls ein Formschluss und /oder Kraftschluss beide Abschnittsteile 51a**, 51b** miteinander verbindet, wobei z.B. ein geschlossener Nietkopf oder ein offener Nietkopf bzw. Hohlniete gebildet wird.

Bei der Herstellung solcher Halterungen, insbesondere beim Verbinden der beide Abschnitts-Teile bzw. -Hälften kann auch vorgesehen sein, dass die beiden Teile mittels Durchsetzfügen bzw. Clinchen oder auch mittels Stanznieten verbunden werden.

Zudem kann vorgesehen werden, dass die beiden Abschnitts-Teile auch noch mit zusätzlichen Nieten und/oder mit zusätzlichen Schrauben verbunden werden.

Durch die hier beschriebenen Konstruktionen und Herstellungsschritte wird zumindest eine halb-kardanische Verbindung in der Halterung für das Kugellager und die Schneckenwelle erzielt, um den Eingriff von Schnecke und Schneckenrad elastisch schwenkbar auszugestalten. Dadurch können nicht nur Klapper- und Vibrationsgeräusche, sondern auch ein Verspannen oder Verklemmen des Schneckengetriebes durch eine zu große Ausdehnung bestimmter Materialien zuverlässig vermieden werden. Es wird somit in vorteilhafter Weise ein spielfreier elastischer Verzahnungseingriff des Schneckenradgetriebes erreicht.

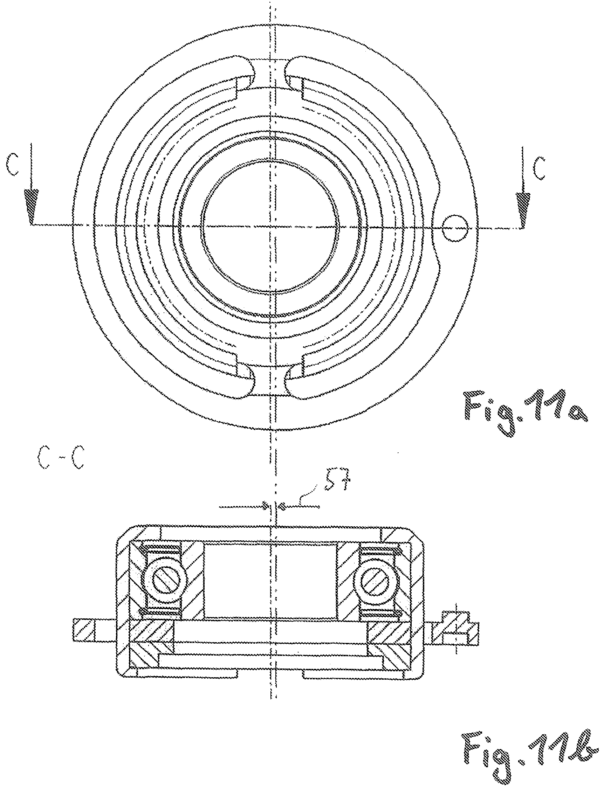

Die Fig. 11a und 11b zeigen in verschiedenen Ansichten eine weitere Ausgestaltung der erfindungsgemäßen Halterung, wobei auch hier der ring- bzw. topfförmige Abschnitt den Außenring des Wälzlagers aufnimmt. Die Verringerung des Achsabstandes der Getriebeteile wird durch den Versatz 57 erreicht. Die Federscheibe 51a und das Wälzlager haben unterschiedliche bzw. zueinander versetzte Mittelpunkte. Der Versatz 57 kann auch erreicht werden, wenn die Lagerstellen der beiden Getriebeteile im Gehäuse diesen aufweisen.

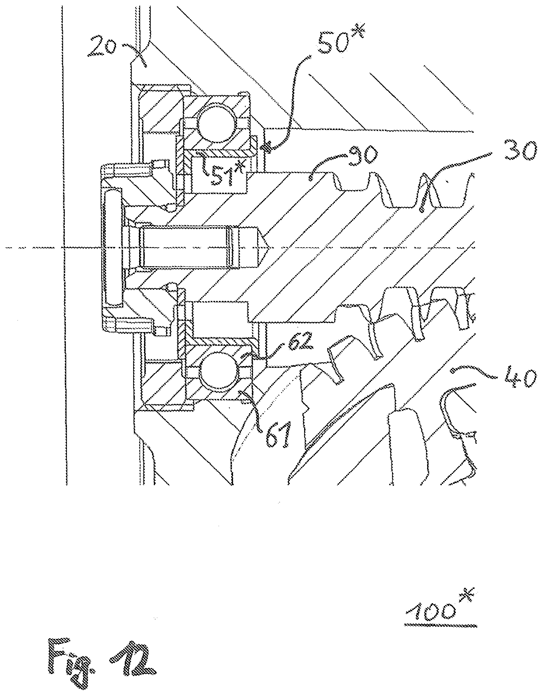

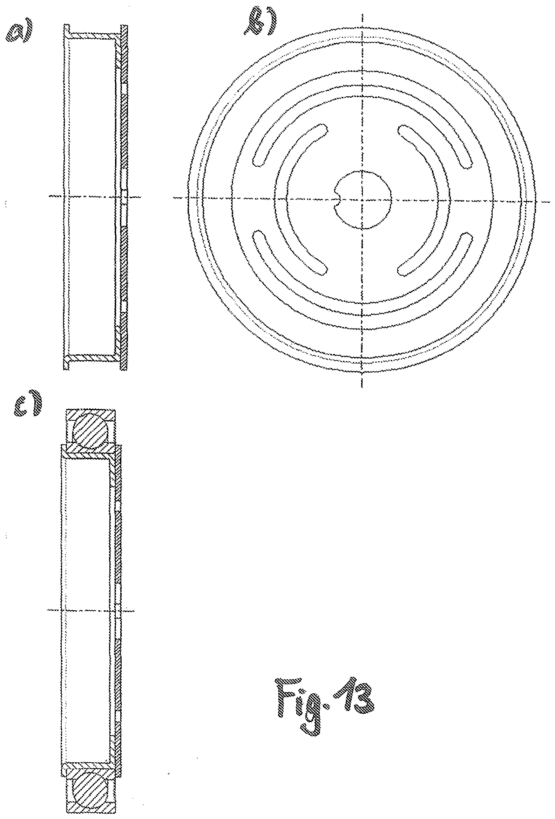

Als alternative Konstruktion zu den zuvor beschriebenen Ausführungsformen zeigen die Fig. 12 sowie 13 a-c ein Lenkgetriebe 100* mit einer auf der Festlagerseite montierten erfindungsgemäßen Halterung 50*, bei der der ringförmige Abschnitt 51* den Innenring 62 des Wälzlagers trägt und der Außenring 61 direkt in dem Gehäuseabschnitt 20 montiert ist. Der scheibenförmige Abschnitt der Halterung 51* ist nun mit der Welle 90 verbunden (verspannt), so dass die elastische Schwenkbarkeit zwischen Innenring 62 und Welle 90 auftritt. Im Vergleich dazu, ist in den zuvor beschriebenen Beispielen (Fig. 2-11) die Konstruktion so gestaltet, dass die elastische Schwenkbarkeit zwischen Außenring und Welle auftritt. Beide Varianten (Fig. 2a/b - 13 oder Fig. 12 u. 13a-c) haben das gemeinsame Prinzip, dass der ringförmige Abschnitt der Halterung das Wälzlager am Außen- oder Innenring trägt und der scheibenförmige Abschnitt mittels der dort vorgesehenen Aussparungen für einen elastischen Halt für das Wälzlager im Gehäuse bzw. an der Welle sorgt. Somit wird ein flexibles Festlager geschaffen, dass kostengünstig hergestellt und an die konkreten Erfordernisse angepasst werden kann.

Für die Loslagerseite (siehe auch LL in Fig. 2a) wird nachfolgend eine Lagerungsvorrichtung in verschiedenen Ausführungsformen beschrieben, die zusätzlich dazu oder auch für sich allein in einem Lenkgetriebe realisiert werden kann und insbesondere am freien Wellenende der Schneck für eine Geräuschreduzierung und Anfederung des Verzahnungseingriffs sorgt:
Die nachfolgend anhand der Fig. 14-20 beschriebene Lagerungsvorrichtung geht von einem Wälzlager bzw. Kugellager aus, das wiederum in einem Lagerungs-Innenring bzw. Innen-Buchse (s. 70 in Fig. 14) aufgenommen ist, wobei der Lagerungs-Innenring mittels eines Steges (s. 71 in Fig. 14) an einem im Gehäuse angeordneten Lagerungs-Außenring bzw. Außen-Buchse (s. 72 in Fig. 14) angebunden ist. Die Lagerungsvorrichtung weist auch elastische Anschlagelemente (s. 74, 75, in Fig.14) auf, die Bewegungen des Wälzlagers abfangen und somit die bei Lenkbewegungen mit Lastwechseln auftretenden Geräuschentwicklung reduzieren. Die störende Geräuschentwicklung entsteht nämlich beim Zahnflankenwechsel zwischen der Schnecke und dem eingreifenden Schneckenrad, wenn zwischen der Schnecke und dem Schneckenrad ein zu großes Spiel existiert. Zur Reduzierung der Geräuschentwicklung dienen der schwenkbare elastische Steg und die auf das Lager drückenden Anschlagelemente bzw. Federelement. Solche Federelemente bzw. -dämpfer mussten bisher während des Montagevorgangs in das Gehäuse eingeschraubt und vom Montagepersonal manuell eingestellt werden. Insbesondere musste zur Einstellung eines herkömmlichen Federdämpfers in dem Gehäuse des Lenkgetriebes eine Gewindebohrung vorgesehen werden. Dies alles erforderte einen verhältnismäßig hohen Fertigungs- und Montageaufwand auf der Loslagerseite.

Um den Fertigungs- und Montageaufwand deutlich zu verringern wird hier erfindungsgemäß mindestens ein elastisches Anschlag- bzw. Federelement zwischen den Buchsen (Innenring und Außenring) angeordnet. Alternativ kann das Federelement auch zwischen dem Gehäuse und dem Innenring oder zwischen dem Gehäuse und einem Lageraußenring oder zwischen dem Außenring und dem Innenring oder zwischen dem Außenring und dem Lageraußenring angeordnet sein. Somit benötigt man jetzt nur noch wenige Bauteile, mitunter nur ein einziges Bauteil, nämlich das elastische Anschlagelement, um die Geräuschbildung zwischen der Schnecke und dem Schneckenrad zu reduzieren. Die bisher erforderliche Gewindebohrung kann ebenfalls entfallen, was den Fertigungs- und der Montageaufwand deutlich reduziert.

Fig. 14 zeigt im radialen Querschnitt den Aufbau eines solchen Loslagers LL, bei dem ein Wälzlager 80 (hier Kugellager) vorgesehen ist, dessen Außenring 78 in einer Innen-Buchse 70 (Lagerungs-Innenring) aufgenommen ist. Die Innen-Buchse 70 ist mittels eines Steges 71 (elastischer Schwenksteg) an einer Außen-Buchse 72 (Lagerungs-Außenring) angebunden, wobei die Außen-Buchse 72 in dem Lenkgetriebe-Gehäuse 73 angeordnet ist. Aufgrund dieser Anordnung, insbesondere aufgrund des elastischen Steges 71, kann das Loslager LL entsprechend der Hin- und Herbewegung der Schnecke (vergl. Fig. 2a) auf- und abschwingen. Der Steg 71 ist vorzugsweise aus einem Elastomer gefertigt, um die schwingende Bewegung über einen sehr langen Zeitraum zuverlässig ausführen zu können. Gegenüber von dem Steg 71 ist ein Anschlagelement 74, das vorzugsweise ebenfalls aus einem Elastomer hergestellt ist, vorgesehen. Dieses Anschlagelement 74 wirkt federnd und verhindert insbesondere ein Verschränken der Schnecke zum Schneckenrad.

Radial dazu versetzt (hier oberhalb des Anschlagelements 74) ist ein weiteres Anschlagelement angeordnet, das als Endanschlag 75 dient und z.B. auch durch ein Federelement realisiert werden kann, welches zumindest bei einem Lastwechsel auf die Innen-Buchse 70 wirkt und somit dämpfend auf das Loslager LL wirkt. Die Fig. 14 zeigt die Situation nach dem Einbau bzw. nach der Montage des Loslagers; die Fig. 15 die Situation davor. Wie anhand des Vergleichs beider Figuren zu erkennen ist, wird das Anschlagelement 74 bei der Montage gegen die Innen-Buchse 70 gedrückt und liegt dort an. Auch das Endanschlagselement kann gegen die Innen-Buchse drücken, wie dies beispielsweise anhand des Elements 135 in Fig, 16 gezeigt wird.

Durch den Druck des jeweiligem Anschlags- bzw. Federelements auf die Innen-Buchse und somit auch auf das Wälzlager selbst wird die Schnecke gegen das Schneckenrad gedrückt, wodurch ein Zahnflankenspiel (Ausweichen der Schnecke bzw. des Schneckenrads) sowie unerwünschte Geräuschbildung, insbesondere bei Last- bzw. Zahnflankenwechsel, reduziert werden.

Das Element 75 (s. Fig. 14) kann einen Bodenbereich 76 größerer Dicke und einen Randbereich 77 geringerer Stärke aufweisen. Der Randbereich 77 mit der geringeren Stärke verleiht dem Element 75 eine geringere Federrate, wohingegen der Bodenbereich mit der größeren Dicke dem Element 75 eine höhere Federrate verleiht. Somit kann das Element 75 zwei unterschiedliche Federraten aufweisen, die abhängig von der jeweiligen Pressung des Elements 75 zum Tragen kommen. Aufgrund der auf- und abschwingenden Bewegung der Schnecke drückt das Element 75 unterschiedlich stark auf das Lager 80. Bei einer geringeren Pressung entfaltet der die geringere Federrate aufweisende Randbereich 77 seine Wirkung, wodurch das Spiel zwischen Schnecke und Schneckenrad reduziert wird. Bei einer stärkeren Pressung des Elements 75 entfaltet hauptsächlich der die höhere Federrate aufweisende Bodenbereich 76 seine Wirkung, so dass die unerwünschten Geräusche beim Zahnflankenwechsel reduziert werden.

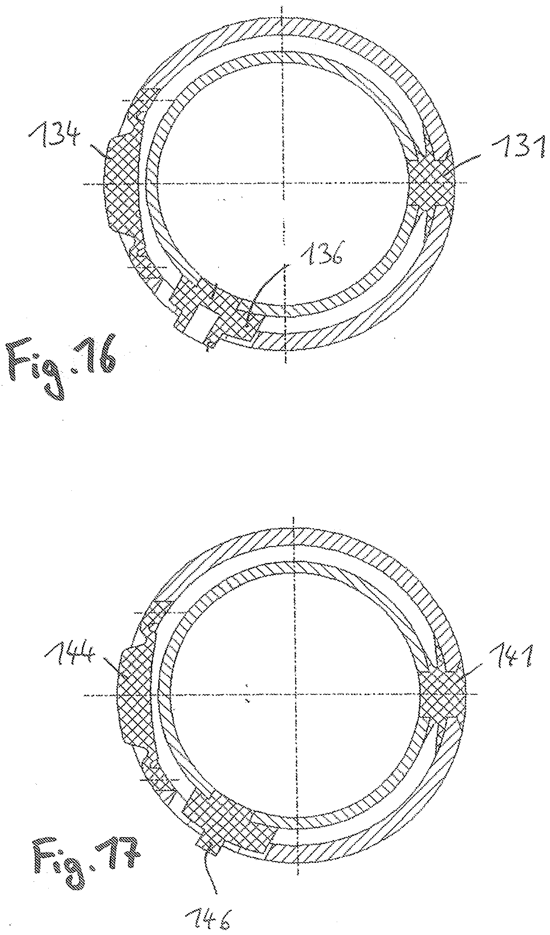

Die Fig. 16 und 17 zeigen weitere Varianten von elastischen Anschlag- bzw. Federelementen. Dabei kann der jeweilige Endanschlag 136 oder 146 auch einen dickeren Bodenbereich und einem dünneren Randbereich aufweisen, wobei der Übergangsbereich zwischen dem Bodenbereich und dem Randbereich von einem Wulst umgeben sein kann. Durch eine solch spezielle geometrische Form erhält das Anschlag- bzw. Federelement eine charakteristische Federkennlinie, die ebenfalls zwei unterschiedliche Federraten aufweist. Durch die spezielle Gestaltung der Anschlag- bzw. Federelemente werden spezielle Federkennlinien erzeugt, um das Spiel zwischen der Schnecke und dem Schneckenrad zu reduzieren.

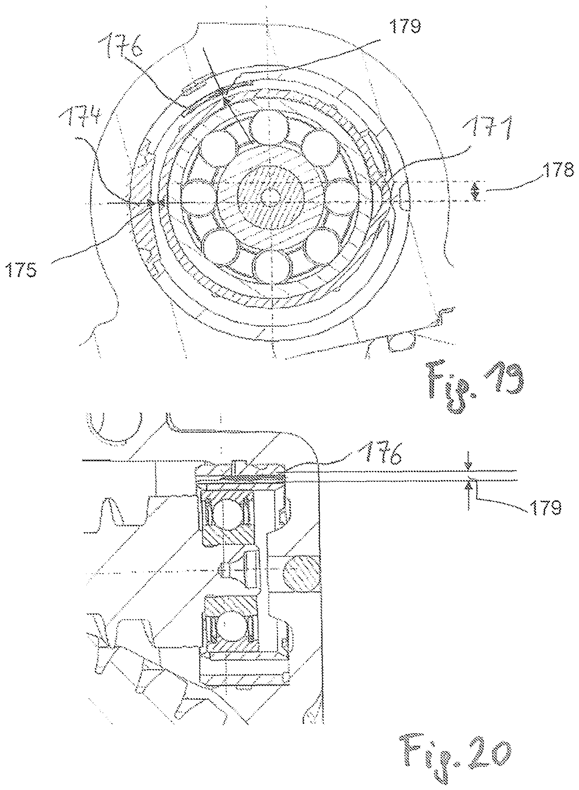

Die Anschlag- bzw. Federelemente, wie z.B. die Elemente 174 und 176 in Fig. 19 und 20, können aus einem Elastomer hergestellt werden. Das mittels des Elastomers jeweils gefertigte Federelement wird nach dem Einbau zunächst stark zusammengepresst. Elastomere Werkstoffe haben jedoch die Eigenschaft, dass sie bei einer hohen Druck- oder Zugbeanspruchung zum Kriechen neigen, wodurch sich die von dem Elastomer aufgebrachte Reaktionskraft reduziert. Folglich verringert sich in Folge des Kriechvorganges schon bald nach dem Einbau des Federelements die von ihm erzeugte Federkraft, so dass sich die Reibung zwischen einer Schnecke und einem Schneckenrad erwünschterweise ebenfalls reduziert. Durch die Verwendung des elastomeren Werkstoffes entfallen die bisher erforderlichen Einstellarbeiten des Federelements, da sich die optimalen Druckkräfte des Federelements aufgrund des Kriechvorganges von alleine einstellen. Folglich können zukünftig auch die Gewindebohrung im Gehäuse des Lenkgetriebes und ein Federdämpfer zur Einstellung des Spiels zwischen Schnecke und Schneckenrad entfallen.

In einer weiteren Ausführungsform kann das Federelement auch aus einem Metall hergestellt werden. Im Gegensatz zu einem Elastomer, das eine progressive Federkennlinie aufweist, weist ein metallischer Werkstoff eine lineare Federkennlinie auf, die folglich im Betrieb eine geringere Steigung als der elastomere Werkstoff aufweist und somit abhängig von den jeweiligen Gegebenheiten zu bevorzugen sein kann.

Für die Herstellung des Federelements können Werkstoffe mit unterschiedlichen Federkennlinien miteinander kombiniert werden. So ist es grundsätzlich auch möglich, dass das Federelement einen elastomeren und einen metallischen Werkstoff aufweist, um die erwähnten unterschiedlichen Federraten zu realisieren. Selbstverständlich können aber auch ausschließlich elastomere Werkstoffe miteinander kombiniert werden.

Neben der Kombination verschiedener Werkstoffe zur Herstellung des Federelements können alternativ oder zusätzlich auch noch unterschiedliche konstruktive Ausgestaltungen des Federelements vorgesehen werden, um das Federelement mit unterschiedlichen Federkennlinien auszustatten. So kann das Federelement einen Bodenbereich größerer Dicke und einen daran angrenzenden Randbereich geringerer Stärke aufweisen. In einer weiteren Ausführungsform ist es möglich, dass das Federelement einen Bodenbereich größerer Dicke und einen daran angrenzenden Kopfbereich geringerer Stärke aufweist.

Die Außen-Buchse (siehe z.B. Element 70 in Fig. 14) kann eine Bohrung aufweisen, in den das Federelement einsteckbar ist. Somit weist das Federelement einen sicheren Sitz auf. Aus demselben Grund kann die Innen-Buchse ebenfalls eine Bohrung aufweisen.

Ebenfalls aus Gründen eines sicheren Sitzes des Federelements, kann sich das Federelement auf dem Innenring abstützen. Ferner drückt das Federelement aufgrund seiner Pressung gegen den Innenring die Schnecke gegen das Schneckenrad.

Das Elastomer kann ein thermoplastisch verarbeitbares oder ein vernetzbares Elastomer sein. Das thermoplastisch verarbeitbare Elastomer ist spritzgiesbar und preisgünstig, wohingegen das vernetzbare Elastomer eine geringere Kriechneigung aufweist. Selbstverständlich kann auch ein thermoplastisch verarbeitbares Elastomer mit einem vernetzbaren Elastomer kombiniert werden.

Das jeweilige Anschlag- bzw. Federelement kann als ein Zweikomponenten-Spritzgussteil herstellbar sein, wodurch der Montage- und Fertigungsaufwand deutlich reduziert werden. Grundsätzlich ist es jedoch auch möglich, die Innen- und Außen-Buchse aus einem Metallblech zu fertigen und das Federelement auf das Metallblech aufzuvulkanisieren. Zusätzlich zu dem Federelement können auch ein Anschlagelement und der Steg aus einem Elastomer gefertigt werden. Diese lassen sich dann ebenfalls zusammen mit dem Federelement, dem Innenring und dem Außenring als ein Zweikomponenten-Spritzgussteil herstellen. Sowohl das Anschlagelement als auch der Steg können jedoch auch auf der Innen-Buchse und/oder Außen-Buchse aufvulkanisiert werden, wenn diese aus einem Metallblech gefertigt sind.

Die Fig. 21 stellt das gesamte Getriebe als schematisch Funktionsansicht und im Vergleich zur realen Ansicht der Fig. 2a dar. Die Festlagerseite FL ist um den Versatz 57 in Richtung des Schneckenrades 40 versetzt. Zur Veranschaulichung sind die Dimensionen stark vergrößert. Wenn das Schneckenrad 40 zur Schnecke 30 montiert wird, schwenkt die Schnecke im Übergangsbereich 53 der Halterung (s. z.B. auch Fig. 3b) und dieser Bereich wird tordiert. Die Schnecke 30 wird durch diese Torsion in das Schneckerad 40 gedrückt und beseitigt so das Getriebespiel. Diese Anfederung bzw. der Versatz wird so gewählt, dass das Leerdurchdrehmoment des Getriebes nicht zu groß wird, jedoch im gesamten Temperaturbereich und auch nach Verschleiß eine Anfederung vorhanden ist. Durch den Versatz 57 verkippt die Schnecke um den Winkel β. (Kippwinkel bzw. Schwenkwinkel). Durch dieses Verkippen wird an der Loslagerstelle der Innenring 70 mit dem Wälzlager 80 geschwenkt. Dieses Schwenken 178 ist insbesondere in Fig. 19 und in der schematischen Darstellung nach Fig. 21 dargestellt. Der Innenring kann diese Bewegung ausführen, da er am Schwenkgelenk 171 beweglich befestigt ist. Wenn das Getriebe ein Drehmoment überträgt, schwenkt die Schnecke 30 auf Grund der Zahntrennkräfte noch weiter vom Schneckenrad 40 weg. Diese Schwenkbewegung wird durch den Anschlag 176 an der Loslagerbuchse begrenzt. Der Spalt 179 zwischen Innenring und Anschlag 176 ist so zu wählen, dass die Spannungen in den Verzahnungselementen des Getriebes nicht die zulässigen Werte überschreitet. Es ist günstig, den Anschlag 176 in einen größeren Winkel als 90° zum Schwenkgelenk 171 zu platzieren, da dadurch das Schwenkgelenk hauptsächlich durch Druckkräfte belastet wird. Dadurch lässt sich die Loslagerbuchse robust gestalten.

Auch wenn die Erfindung beispielhaft an einem als Schneckengetriebe ausgebildeten Schraubradgetriebe beschrieben worden ist, so ist die Erfindung nicht auf Schraubradgetriebe beschränkt, sondern kann allgemein auf jede Art von Lenkgetriebe angewendet werden. Die gezeigten Ausführungsbeispiele sind besonders für den Einsatz in einer elektrischen Hilfskraftlenksystem für Kraftfahrzeuge geeignet.

## Patentansprüche

1. Lenkgetriebe (100) mit einem Schraubritzel (30), das über eine Welle (90) mit einem Antrieb verbindbar ist und in das ein Schraubrad (40) eingreift, wobei das Lenkgetriebe (100) an dem antriebsseitigen Ende der Welle (90) eine als Festlager (FL) ausgebildete Wellenlagerung (50) aufweist, die zur Lagerung der Welle (90) ein erstes Wälzlager (60) aufweist, wobei das Lenkgetriebe (100) an dem freien Ende des Schraubritzels (30) eine als Loslager (LL) ausgebildete Lagerungsvorrichtung (80) aufweist, die zur Lagerung des Schraubritzels (30) ein zweites Wälzlager (80) aufweist, wobei die Wellenlagerung (50) eine in einem Gehäuseabschnitt (20) des Lenkgetriebes (100) montierte Halterung (51) mit Aussparungen (52) aufweist, die eine Schwenkbewegung (β) für einen ringförmigen Abschnitt (51 b) der Halterung (51) ermöglichen, der mit dem ersten Wälzlager (60) montiert ist, und dass die Halterung (51) einen mit den Aussparungen (52) versehenen scheibenförmigen Abschnitt (51 a) aufweist, gegenüber dem der ringförmige Abschnitt (51b) verschwenkbar ist, wobei der ringförmige Abschnitt (51b) entweder mit dem Außenring (61) des ersten Wälzlagers (60) montiert und der scheibenförmige Abschnitt (51 a) an dem Gehäuseabschnitt (20) befestigt ist, oder der ringförmige Abschnitt (51 b) mit dem Innenring (62) des ersten Wälzlagers (60) montiert und der scheibenförmige Abschnitt (51a) an der Welle (90) befestigt ist,
**dadurch gekennzeichnet, dass**
die Schwenkbewegung (β) eine Torsion von zwischen den Aussparungen (52) sich ausbildenden Übergangsbereichen (53) bewirkt, wobei das Schraubritzel (30) durch die Torsion der Übergangsbereiche (53) in das Schraubrad (40) angefedert wird.

2. Lenkgetriebe nach Anspruch 1, **dadurch gekennzeichnet, dass** an oder in der Halterung (51) ein Versatz (57) vorgesehen ist, der im montierten Zustand des Lenkgetriebes (100) eine durch die Torsion angefederte Schwenkbewegung (β) des Schraubritzels (30) in Bezug auf das Schraubrad (40) bewirkt.

3. Lenkgetriebe nach Anspruch 1, **dadurch gekennzeichnet, dass** zumindest an oder in dem Festlager (FL) ein Versatz (57) vorgesehen ist, der im montierten Zustand des Lenkgetriebes (100) eine durch die Torsion angefederte Schwenkbewegung (β) des Schraubritzels (30) in Bezug auf das Schraubrad (40) bewirkt.

4. Lenkgetriebe nach Anspruch 1, **dadurch gekennzeichnet, dass** zumindest das Schraubritzel (30) und/oder das Schraubrad (40) zueinander so dimensioniert sind, dass ein Versatz (57) sich ausbildet, der im montierten Zustand des Lenkgetriebes (100) eine durch die Torsion angefederte Schwenkbewegung (β) des Schraubritzels (30) in Bezug auf das Schraubrad (40) bewirkt.

5. Lenkgetriebe nach einem der Ansprüche 2 bis 4, **dadurch gekennzeichnet, dass** sich zumindest durch das Festlager (FL) ein Achsabstand zwischen Schraubritzel (30) und Schraubrad (40) einstellt.

6. Lenkgetriebe nach einem der vorhergehenden Ansprüche, **dadurch gekennzeichnet, dass** die Halterung (51) mehrstückig ausgebildet ist, wobei der ringförmige Abschnitt (51 b) als ein erstes Stück aus einem ersten Material, insbesondere aus Weichblech, und der scheibenförmige Abschnitt (51 a) als ein zweites Stück aus einem zweiten Material, insbesondere aus Federstahlblech, gefertigt sind.

7. Lenkgetriebe (100) nach der vorhergehenden Ansprüche, **dadurch gekennzeichnet, dass** der ringförmige Abschnitt (51 b) topfförmig ausgebildet ist und ein zylindrisches, insbesondere aus Weichblech geformtes, Gehäuse aufweist, das den Außenring (61) des ersten Wälzlagers (60) umschließt.

8. Lenkgetriebe (100*) der vorhergehenden Ansprüche, **dadurch gekennzeichnet, dass** der ringförmige Abschnitt (51 b) kranzförmig ausgebildet ist und den Innenring (61) des ersten Wälzlagers (60) trägt.

9. Lenkgetriebe nach einem der vorhergehenden Ansprüche, **dadurch gekennzeichnet, dass** der scheibenförmige Abschnitt (51 a) laschenförmig ausgebildet ist.

10. Lenkgetriebe (100) nach einem der vorhergehenden Ansprüche, **dadurch gekennzeichnet, dass** in dem ring- bzw. scheibenförmigen Abschnitt der Halterung (51"') zusätzlich zu den Aussparungen (52a) noch weitere Aussparungen (52b) vorgesehen sind, die radial dazu versetzt sind, so dass sich zu den sich gegenüberliegenden stegförmigen Übergangsbereichen (53a) weitere sich gegenüberliegende stegförmige Übergangsbereiche (53b) ausbilden, die damit zusammen eine voll-kardanisch elastische Verbindung zwischen dem scheibenförmigen Abschnitt und dem topfförmigen Abschnitt darstellen.

11. Lenkgetriebe (100) nach einem der vorhergehenden Ansprüche, **dadurch gekennzeichnet, dass** an dem Gehäuseabschnitt (20) des Lenksystems zumindest ein elastisches Dämpfungselement (59) vorgesehen ist, gegen das die axial bewegbare Halterung (51) anschlägt.

12. Lenkgetriebe (100) nach einem der vorhergehenden Ansprüche, **dadurch gekennzeichnet, dass** die Halterung (51), insbesondere der scheibenförmige Abschnitt (51 a), in dem Gehäuseabschnitt (20) mittels einer Stellschraube und/oder eines Schraubrings (70*) fixiert ist.

13. Lenkgetriebe (100) nach einem der vorhergehenden Ansprüche, **dadurch gekennzeichnet, dass** das zweite Wälzlager (80) der als Loslager (LL) ausgebildeten Lagerungsvorrichtung in einem Lagerungs-Innenring (70) angeordnet ist, der wiederum mittels eines Steges, insbesondere eines elastischen Stegelements (71), an einen in dem Gehäuseabschnitt (73) angeordneten Lagerungs-Außenring (72) angebunden ist.

14. Lenkgetriebe (100) nach Anspruch 13, **dadurch gekennzeichnet, dass** der Lagerungs-Innenring als eine das zweite Wälzlager (80) aufnehmende erste Buchse bzw. Innen-Buchse (70) ausgebildet ist, und dass der Lagerungs-Außenring als eine die Innen-Buchse (70) aufnehmende zweite Buchse bzw. Außen-Buchse (72) ausgebildet ist, wobei zwischen den Buchsen (70, 72) ein von dem Steg bzw. Stegelement (71) überbrückter Zwischenabstand bzw. Zwischenraum (79) ausgebildet ist.

15. Lenkgetriebe (100) nach Anspruch 14, **dadurch gekennzeichnet, dass** in dem Lagerungs-Außenring bzw. der Außen-Buchse (72) mindestens ein, insbesondere aus einem Elastomer gefertigtes elastisches Anschlagelement (74, 75), angeordnet ist, gegen das der Lagerungs-Innenring bzw. die Innen-Buchse (72) anschlägt, insbesondere bei im Lenkgetriebe auftretenden Lastwechseln anschlägt.

16. Lenkgetriebe (100) nach Anspruch 15, **dadurch gekennzeichnet, dass** mindestens eines der Anschlagelemente als ein zumindest bei einem Lastwechsel auf das Wälzlager (80) drückendes Federelement (75) ausgebildet ist.

17. Lenksystem, insbesondere elektrisches Hilfskraftlenksystem mit einem Lenkgetriebe nach einem der vorhergehenden Ansprüche.

18. Verfahren zur Herstellung einer Halterung (51*) eines Lenkgetriebe (100) nach einem der Ansprüche 1 bis 18, wobei
die Halterung (51*) zur Montage auf der Festlagerseite (FL) in einem Gehäuseabschnitt (20) des Lenkgetriebes (100) hergestellt wird, so dass die Halterung (51*) einen mit den Aussparungen (52) versehenen scheibenförmigen Abschnitt (51a) aufweist, gegenüber dem der ringförmige Abschnitt (51 b) verschwenkbar ist, wobei der ringförmige Abschnitt (51 b) entweder mit dem Außenring (61) des ersten Wälzlagers (60) montiert und der scheibenförmige Abschnitt (51 a) an dem Gehäuseabschnitt (20) befestigt wird, oder der ringförmige Abschnitt (51 b) mit dem Innenring (62) des ersten Wälzlagers (60) montiert und der scheibenförmige Abschnitt (51a) an der Welle (90) befestigt wird,
**dadurch gekennzeichnet, dass**
die Halterung (51*) aus einem scheibenförmigen oder laschenförmigen Abschnittsteil (51a*) aus einem ersten Blech (FB), insbesondere Federstahlblech, hergestellt wird, und aus einem topfförmigen Abschnittsteil (51b*) aus einem zweiten Blech (WB), insbesondere Weichblech, hergestellt wird, indem beide Abschnittsteile (51a*, 51b*) miteinander form- und/oder kraftschlüssig verbunden werden oder in dem ersten Blech (FB) Öffnungen (56*) vorhanden sind, durch die von einer Seite Material des zweiten Blechs (WB) gedrückt und anschliessend von der Gegenseite umgeformt wird, so dass ein Formschluss und /oder Kraftschluss beide Abschnittsteile (51a*, 51b*) miteinander verbindet oder in dem ersten Blech (FB) Öffnungen (56*) vorhanden sind, durch die von einer Seite hervorstehende Bereiche des topfartigen Abschnittsteils (51b*) gesteckt werden und anschliessend von der Gegenseite umgeformt werden, so dass ein Formschluss und /oder Kraftschluss beide Abschnittsteile (51a*, 51b*) miteinander verbindet.

## Claims

1. Steering gear (100) having a helical pinion (30) which can be connected via a shaft (90) to a drive and into which a helical gear (40) engages, the steering gear (100) having, at the drive-side end of the shaft (90), a shaft bearing (50) which is configured as a locating bearing (FL) and has a first anti-friction bearing (60) for mounting the shaft (90), the steering gear (100) having, at the free end of the helical pinion (30), a bearing apparatus (80) which is configured as a floating bearing (LL) and has a second anti-friction bearing (80) for mounting the helical pinion (30), the shaft bearing (50) having a holding device (51) which is mounted in a housing section (20) of the steering gear (100) and has cut-outs (52) which make a pivoting movement (β) possible for an annular section (51b) of the holding device (51), which annular section (51b) is mounted by way of the first anti-friction bearing (60), and the holding device (51) having a disc-shaped section (51a) which is provided with the cut-outs (52) and with respect to which the annular section (51b) can be pivoted, the annular section (51b) being mounted either with the outer ring (61) of the first anti-friction bearing (60) and the disc-shaped section (51a) being fastened to the housing section (20), or the annular section (51b) being mounted with the inner ring (62) of the first anti-friction bearing (60) and the disc-shaped section (51a) being fastened to the shaft (90), **characterized in that** the pivoting movement (β) brings about a torsion of transition regions (53) which are formed between the cut-outs (52), the helical pinion (30) being sprung into the helical gear (40) by way of the torsion of the transition regions (53).

2. Steering gear according to Claim 1, **characterized in that** an offset (57) is provided on or in the holding device (51), which offset (57), in the mounted state of the steering gear (100), brings about a pivoting movement (β) of the helical pinion (30) in relation to the helical gear (40), which pivoting movement (β) is sprung by way of the torsion.

3. Steering gear according to Claim 1, **characterized in that** an offset (57) is provided at least on or in the locating bearing (FL), which offset (57), in the mounted state of the steering gear (100), brings about a pivoting movement (β) of the helical pinion (30) in relation to the helical gear (40), which pivoting movement (β) is sprung by way of the torsion.

4. Steering gear according to Claim 1, **characterized in that** at least the helical pinion (30) and/or the helical gear (40) are/is dimensioned with respect to one another that an offset (57) is formed which, in the mounted state of the steering gear (100), brings about a pivoting movement (β) of the helical pinion (30) in relation to the helical gear (40), which pivoting movement (β) is sprung by way of the torsion.

5. Steering gear according to one of Claims 2 to 4, **characterized in that** an axial spacing is set between the helical pinion (30) and the helical gear (40) at least by way of the locating bearing (FL).

6. Steering gear according to one of the preceding claims, **characterized in that** the holding device (51) is configured in multiple pieces, the annular section (51b) being manufactured as a first piece from a first material, in particular from soft metal sheet, and the disc-shaped section (51a) being manufactured as a second piece from a second material, in particular from spring sheet steel.

7. Steering gear (100) according to the preceding claims, **characterized in that** the annular section (51b) is of pot-shaped configuration and has a cylindrical housing which is formed, in particular, from soft metal sheet and encloses the outer ring (61) of the first anti-friction bearing (60).

8. Steering gear (100*) of the preceding claims, **characterized in that** the annular section (51b) is of collar-shaped configuration and supports the inner ring (61) of the first anti-friction bearing (60).

9. Steering gear according to one of the preceding claims, **characterized in that** the disc-shaped section (51a) is of bracket-shaped configuration.

10. Steering gear (100) according to one of the preceding claims, **characterized in that** further cut-outs (52b) are also provided in the annular or disc-shaped section of the holding device (51"') in addition to the cut-outs (52a), which further cut-outs (52b) are offset radially with respect to the said cut-outs (52a), with the result that further web-shaped transition regions (53b) which lie opposite one another are formed in addition to the web-shaped transition regions (53a) which lie opposite one another, which transition regions therefore together produce a fully cardanic elastic connection between the disc-shaped section and the pot-shaped section.

11. Steering gear (100) according to one of the preceding claims, **characterized in that** at least one elastic damping element (59), against which the axially movable holding device (51) strikes, is provided on the housing section (20) of the steering system.

12. Steering gear (100) according to one of the preceding claims, **characterized in that** the holding device (51), in particular the disc-shaped section (51a), is fixed in the housing section (20) by means of an adjusting screw and/or a helical ring (70*).

13. Steering gear (100) according to one of the preceding claims, **characterized in that** the second anti-friction bearing (80) of the bearing apparatus which is configured as a floating bearing (LL) is arranged in a bearing inner ring (70) which is in turn attached by means of a web, in particular an elastic web element (71), to a bearing outer ring (72) which is arranged in the housing section (73).

14. Steering gear (100) according to Claim 13, **characterized in that** the bearing inner ring is configured as a first bush or inner bush (70) which receives the second anti-friction bearing (80), and **in that** the bearing outer ring is configured as a second bush or outer bush (72) which receives the inner bush (70), an intermediate spacing or intermediate space (79) which is bridged by the web or web element (71) being configured between the bushes (70, 72).

15. Steering gear (100) according to Claim 14, **characterized in that** at least one elastic stop element (74, 75) which is manufactured, in particular, from an elastomer is arranged in the bearing outer ring or the outer bush (72), against which stop element (74, 75) the bearing inner ring or the inner bush (72) strikes, in particular strikes in the case of load changes which occur in the steering gear.

16. Steering gear (100) according to Claim 15, **characterized in that** at least one of the stop elements is configured as a spring element (75) which presses on the anti-friction bearing (80) at least in the case of a load change.

17. Steering system, in particular an electric power steering system having a steering gear according to one of the preceding claims.

18. Method for producing a holding device (51*) of a steering gear (100) according to one of Claims 1 to 18, the holding device (51*) being manufactured for mounting on the locating bearing side (FL) in a housing section (20) of the steering gear (100), with the result that the holding device (51*) has a disc-shaped section (51a) which is provided with the cut-outs (52) and with respect to which the annular section (51b) can be pivoted, the annular section (51b) either being mounted with the outer ring (61) of the first anti-friction bearing (60) and the disc-shaped section (51a) being fastened to the housing section (20), or the annular section (51b) being mounted with the inner ring (62) of the first anti-friction bearing (60) and the disc-shaped section (51a) being fastened to the shaft (90), **characterized in that** the holding device (51*) is manufactured from a disc-shaped or bracket-shaped section part (51a*) made from a first sheet metal (FB), in particular spring sheet steel, and is manufactured from a pot-shaped section part (51b*) made from a second sheet metal (WB), in particular soft sheet metal, by both section parts (51a*, 51b*) being connected to one another in a positively locking and/or non-positive manner or there being openings (56*) in the first sheet metal (FB), through which openings (56*) material of the second sheet metal (WB) is pressed from one side and is subsequently reshaped from the opposite side, with the result that a positively locking connection and/or non-positive connection connects both section parts (51a*, 51b*) to one another, or there being openings (56*) in the first sheet metal (FB), through which openings (56*) projecting regions of the pot-like section part (51b*) are plugged from one side and are subsequently reshaped from the opposite side, with the result that the positively locking connection and/or non-positive connection connects both section parts (51a*, 51b*) to one another.

## Revendications

1. Mécanisme de direction (100) comprenant un pignon à vis (30) qui peut être connecté par le biais d'un arbre (90) à un entraînement et qui vient en prise dans une roue hypoïde (40), le mécanisme de direction (100) présentant, au niveau de l'extrémité de l'arbre (90) du côté de l'entraînement, un support sur palier d'arbre (50) réalisé sous forme de palier fixe (FL), qui présente un premier palier à roulement (60) pour le support sur palier de l'arbre (90), le mécanisme de direction (100) présentant, au niveau de l'extrémité libre du pignon à vis (30), un dispositif de support sur palier (80) réalisé sous forme de palier fou (LL), qui présente un deuxième palier à roulement (80) pour le support sur palier du pignon à vis (30), le support sur palier d'arbre (50) présentant une fixation (51) montée dans une portion de boîtier (20) du mécanisme de direction (100) avec des évidements (52) qui permettent un mouvement de pivotement (β) pour une portion annulaire (51b) de la fixation (51) qui est montée avec le premier palier à roulement (60), et la fixation (51) présentant une portion (51a) en forme de disque pourvue des évidements (52) par rapport à laquelle la portion annulaire (51b) peut pivoter, la portion annulaire (51b) soit étant montée avec la bague extérieure (61) du premier palier à roulement (60) et la portion en forme de disque (51a) étant fixée à la portion de boîtier (20), soit la portion annulaire (51b) étant montée avec la bague intérieure (62) du premier palier à roulement (60) et la portion en forme de disque (51a) étant fixée à l'arbre (90),
**caractérisé en ce que**
le mouvement de pivotement (β) provoque une torsion des régions de transition (53) se formant entre les évidements (52), le pignon à vis (30) étant chargé par ressort par la torsion des régions de transition (53) dans la roue hypoïde (40).

2. Mécanisme de direction selon la revendication 1, **caractérisé en ce qu'**un décalage (57) est prévu sur ou dans la fixation (51), lequel, dans l'état monté du mécanisme de direction (100), provoque un mouvement de pivotement (β) du pignon à vis (30), chargé par ressort par la torsion, par rapport à la roue hypoïde (40).

3. Mécanisme de direction selon la revendication 1, **caractérisé en ce qu'**un décalage (57) est prévu au moins sur ou dans le palier fixe (FL), lequel, dans l'état monté du mécanisme de direction (100), provoque un mouvement de pivotement (β) du pignon à vis (30), chargé par ressort par la torsion, par rapport à la roue hypoïde (40).

4. Mécanisme de direction selon la revendication 1, **caractérisé en ce qu'**au moins le pignon à vis (30) et/ou la roue hypoïde (40) sont dimensionnés l'un par rapport à l'autre de telle sorte qu'il se forme un décalage (57) qui, dans l'état monté du mécanisme de direction (100), provoque un mouvement de pivotement (β) du pignon à vis (30), chargé par ressort par la torsion, par rapport à la roue hypoïde (40).

5. Mécanisme de direction selon l'une quelconque des revendications 2 à 4, **caractérisé en ce qu'**une distance axiale s'ajuste entre le pignon à vis (30) et la roue hypoïde (40) au moins par le biais du palier fixe (FL).

6. Mécanisme de direction selon l'une quelconque des revendications précédentes, **caractérisé en ce que** la fixation (51) est réalisée en plusieurs parties, la portion annulaire (51b) étant réalisée en tant que première partie constituée d'un premier matériau, en particulier de tôle malléable, et la portion en forme de disque (51a) étant fabriquée sous forme de deuxième partie en un deuxième matériau, en particulier en tôle d'acier à ressort.

7. Mécanisme de direction (100) selon des revendications précédentes, **caractérisé en ce que** la portion annulaire (51b) est réalisée en forme de pot et présente un boîtier cylindrique, en particulier formé en tôle malléable, qui entoure la bague extérieure (61) du premier palier à roulement (60).

8. Mécanisme de direction (100*) selon des revendications précédentes, **caractérisé en ce que** la portion annulaire (51b) est réalisée en forme de couronne et porte la bague intérieure (61) du premier palier à roulement (60).

9. Mécanisme de direction selon l'une quelconque des revendications précédentes, **caractérisé en ce que** la portion en forme de disque (51a) est réalisée en forme de patte.

10. Mécanisme de direction (100) selon l'une quelconque des revendications précédentes, **caractérisé en ce que** dans la portion annulaire ou en forme de disque de la fixation (51"') sont prévus, en plus des évidements (52a), encore d'autres évidements (52b) qui sont décalés radialement par rapport à ceux-ci de telle sorte qu'en plus des régions de transition (53a) en forme de nervures opposées, il se forme d'autres régions de transition en forme de nervures opposées (53b), qui constituent ainsi ensemble une connexion élastique entièrement à cardan entre la portion en forme de disque et la portion en forme de pot.

11. Mécanisme de direction (100) selon l'une quelconque des revendications précédentes, **caractérisé en ce qu'**au moins un élément d'amortissement élastique (59) est prévu au niveau de la portion de boîtier (20) du système de direction, contre lequel bute la fixation déplaçable axialement (51).

12. Mécanisme de direction (100) selon l'une quelconque des revendications précédentes, **caractérisé en ce que** la fixation (51), en particulier la portion en forme de disque (51a), est fixée dans la portion de boîtier (20) au moyen d'une vis de réglage et/ou d'une bague filetée (70*).

13. Mécanisme de direction (100) selon l'une quelconque des revendications précédentes, **caractérisé en ce que** le deuxième palier à roulement (80) du dispositif de support sur palier réalisé sous forme de palier fou (LL) est disposé dans une bague interne de support sur palier (70) qui est à son tour raccordée au moyen d'une nervure, en particulier d'un élément de nervure élastique (71), à une bague extérieure de support sur palier (72) disposée dans la portion de boîtier (73).

14. Mécanisme de direction (100) selon la revendication 13, **caractérisé en ce que** la bague intérieure de support sur palier est réalisée sous forme de première douille ou de douille intérieure (70) recevant le deuxième palier à roulement (80), et **en ce que** la bague extérieure de support sur palier est réalisée sous forme de deuxième douille ou de douille extérieure (72) recevant la douille intérieure (70), une distance intermédiaire ou un espace intermédiaire (79) surmonté(e) par la nervure ou par l'élément de nervure (71) étant réalisé(e) entre les douilles (70, 72).

15. Mécanisme de direction (100) selon la revendication 14, **caractérisé en ce que** dans la bague extérieure de support sur palier ou la douille extérieure (72) est disposé au moins un élément de butée élastique (74, 75) fabriqué notamment en élastomère, contre lequel bute la bague intérieure de support sur palier ou la douille intérieure (72), en particulier lors de changements de charges se produisant dans le mécanisme de direction.

16. Mécanisme de direction (100) selon la revendication 15, **caractérisé en ce qu'**au moins l'un des éléments de butée est réalisé sous forme d'élément de ressort (75) pressant sur le palier à roulement (80) au moins lors d'un changement de charge.

17. Système de direction, en particulier système de direction assistée électrique comprenant un mécanisme de direction selon l'une quelconque des revendications précédentes.

18. Procédé de fabrication d'une fixation (51*) d'un mécanisme de direction (100) selon l'une quelconque des revendications 1 à 18, dans lequel la fixation (51*) est réalisée pour le montage sur le côté du palier fixe (FL) dans une portion de boîtier (20) du mécanisme de direction (100), de telle sorte que la fixation (51*) présente une portion (51a) en forme de disque pourvue des évidements (52), par rapport à laquelle la portion annulaire (51b) peut pivoter, soit la portion annulaire (51b) étant montée avec la bague extérieure (61) du premier palier à roulement (60) et la portion en forme de disque (51a) étant fixée à la portion de boîtier (20), soit la portion annulaire (51b) étant montée avec la bague intérieure (62) du premier palier à roulement (60) et la portion en forme de disque (51a) étant fixée à l'arbre (90),
**caractérisé en ce que**
la fixation (51*) est fabriquée à partir d'une partie de portion (51a*) en forme de disque ou en forme de patte en une première tôle (FB), en particulier tôle d'acier à ressort, et à partir d'une partie de portion (51b*) en forme de pot en une deuxième tôle (WB), en particulier de tôle malléable, les deux parties de portion (51a*, 51b*) étant pour cela assemblées l'une à l'autre par engagement par correspondance de formes et/ou par force ou des ouvertures (56*) étant prévues dans la première tôle (FB) à travers lesquelles du matériau de la deuxième tôle (WB) est pressé depuis un côté et est ensuite mis en forme depuis le côté opposé de telle sorte qu'un engagement par correspondance de formes et/ou un engagement par force relie l'une à l'autre les deux parties de portion (51a*, 51b*) ou des ouvertures (56*) étant prévues dans la première tôle (FB), à travers lesquelles sont enfichées des régions de la partie de portion en forme de pot (51b*) faisant saillie depuis un côté et sont ensuite mises en forme depuis le côté opposé de telle sorte qu'un engagement par correspondance de formes et/ou par force relie l'une à l'autre les deux parties de portion (51a*, 51b*).
